(19) Europäisches Patentamt
European Patent Office
Office européen des brevets

(11) EP 3 699 232 B1

(12) **EUROPEAN PATENT SPECIFICATION**

(45) Date of publication and mention of the grant of the patent:
**03.04.2024 Bulletin 2024/14**

(21) Application number: **18868305.6**

(22) Date of filing: **15.10.2018**

(51) International Patent Classification (IPC):
***C08L 69/00*** *(2006.01)* ***C08K 5/101*** *(2006.01)*
***C08K 5/10*** *(2006.01)*

(52) Cooperative Patent Classification (CPC):
(C-Sets available)
**C08K 5/101; C08K 3/013; C08K 5/11; C08K 5/12; C08L 69/00;** C08K 2201/019 (Cont.)

(86) International application number:
**PCT/JP2018/038336**

(87) International publication number:
**WO 2019/078162 (25.04.2019 Gazette 2019/17)**

(54) **RESIN COMPOSITION AND MOLDED ARTICLE**

HARZZUSAMMENSETZUNG UND FORMARTIKEL

COMPOSITION DE RÉSINE ET ARTICLE MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.10.2017 JP 2017200814**

(43) Date of publication of application:
**26.08.2020 Bulletin 2020/35**

(73) Proprietor: **Mitsubishi Chemical Corporation**
**Chiyoda-ku**
**Tokyo 100-8251 (JP)**

(72) Inventors:
- **SANO, Mayu**
**Hiratsuka-shi**
**Kanagawa 254-0016 (JP)**
- **TAJIMA, Hiroyuki**
**Hiratsuka-shi**
**Kanagawa 254-0016 (JP)**
- **NAKAMURA, Takeshi**
**Tokyo 100-8251 (JP)**
- **MONDEN, Toshiki**
**Tokyo 100-8251 (JP)**

(74) Representative: **Zimmermann & Partner Patentanwälte mbB**
**Postfach 330 920**
**80069 München (DE)**

(56) References cited:
**JP-A- 2004 059 744**
**JP-A- 2010 270 221**
**JP-A- 2013 064 045**
**JP-A- 2014 228 767**
**JP-A- 2014 228 767**
**JP-A- 2016 153 442**
**JP-A- 2016 216 534**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 699 232 B1

(52) Cooperative Patent Classification (CPC): (Cont.)

C-Sets
**C08K 3/013, C08L 69/00;**
**C08K 5/101, C08L 69/00;**
**C08K 5/11, C08L 69/00;**
**C08K 5/12, C08L 69/00;**
**C08L 69/00, C08K 5/10, C08L 69/00;**
**C08L 69/00, C08K 5/101, C08L 69/00**

## Description

TECHNICAL FIELD

This invention relates to a resin composition and a molded article, and particularly to a resin composition using a polycarbonate resin, which is capable of yielding a molded article that excels in transparency, scratch resistance and surface hardness.

BACKGROUND ART

Polycarbonate resin, featured by its excellent mechanical strength, electrical characteristics, transparency and so forth, has been widely used as an engineering plastic in various fields including electric/electronic equipment and automobiles. In these fields in recent years, molded articles have been becoming thinner, more cost-saving, smaller and lighter, raising further demands for improved performance of molding material. Several proposals have been made.

For example, Patent Literature 1 discloses a polycarbonate resin that contains, per 100 parts by mass of polycarbonate resin (A) with a predetermined structure, 0.1 to 12 parts by mass of a graft copolymer (B) having a polyethylene-based polymer in the principal chain, and a vinyl-based polymer segment in the side chain. The literature also describes that the polycarbonate resin excels in nail scratch resistance.

JP 2014 228767 A describes a light guide which comprises either a mixture of a polycarbonate resin having a structural unit of general formula (1)

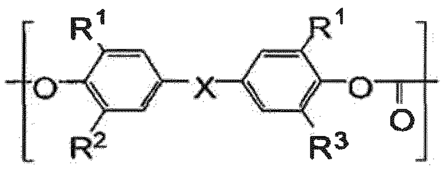

... (1)

and a polycarbonate resin having a specific structural unit, or a copolycarbonate resin having the structural unit of general formula (1) and the specific structural unit.

CITATION LIST

PATENT LITERATURE

[Patent Literature 1] JP-A-2017-110180

SUMMARY OF THE INVENTION

TECHNICAL PROBLEM

A polycarbonate resin that contains a structural unit derived from bisphenol C has been known to have a relatively high pencil hardness . Molded articles molded from such polycarbonate resin that contains a structural unit derived from bisphenol C may occasionally be used as final products without being treated for example by coating (may occasionally be referred to as "coating-less", hereinafter). Investigations by the present inventors, however, revealed that such molded articles are somewhat problematic in terms of nail scratch resistance, despite their high pencil hardness. The resin composition described in Patent Literature 1, which excels in nail scratch resistance, is however in pursuit of advanced jetness, needing a novel material to be developed for applications where transparency is required. The resin composition is also required to keep high transparency even after friction test.

The polycarbonate resin has also succeeded in achieving high scratch resistance, and particularly in keeping high transparency as a result of addition of an appropriate additive, but the extrudability have been occasionally degraded with an excessive amount of addition of such additive.

It is therefore an object of this invention to solve the aforementioned problems, and is to provide a resin composition which excels in surface hardness and scratch resistance, particularly excels in retention rate of transparency after friction test, as well as in extrudability, and is also to provide a molded article using the resin composition.

SOLUTION TO PROBLEM

The present inventors conducted research to address the above-mentioned problems, and as a result, discovered that the above problems could be solved by mixing a ester compound into the predetermined polycarbonate resin, and moreover, setting a predetermined haze and a dynamic friction coefficient to a predetermined range. Specifically, the problems described above are solved by the following means <1>, and preferably by the following means <2> to <11>.

<1> A resin composition containing 0.4 to 10.0 parts by mass of (B) ester compound, per 100 parts by mass of (A) polycarbonate resin, the (A) polycarbonate resin containing 50 to 100 mol%, relative to the total structural units, of a structural unit represented by formula (1) below, and a specimen having a thickness of 2 mm and formed from the resin composition having a haze of 5.0% or smaller, and a dynamic friction coefficient of 0.35 or smaller when measured under a load of 30 N according to ISO 19252;

Formula (1)

[Chemical Formula 1]

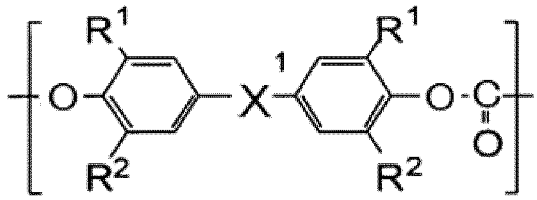

in formula (1), each $R^1$ represents a methyl group, each $R^2$ represents a hydrogen atom or a methyl group, $X^1$ represents either one of structures below:

[Chemical Formula 2]

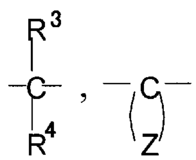

where, each of $R^3$ and $R^4$ independently represents a hydrogen atom or a methyl group, and Z represents a group that combines with C to form an optionally substituted alicyclic hydrocarbon group having 6 to 12 carbon atoms.

<2> The resin composition of <1>, containing 0.5 to 10.0 parts by mass of the (B) ester compound, per 100 parts by mass of the (A) polycarbonate resin.

<3> The resin composition of <1> or <2>, wherein the (B) ester compound is a fatty acid ester.

<4> The resin composition of any one of <1> to <3>, wherein the (B) ester compound is formed of a saturated straight-chain carboxylic acid and a saturated straight-chain alcohol.

<5> The resin composition of any one of <1> to <4>, wherein the (B) ester compound is at least one kind of monoester compounds.

<6> The resin composition of any one of <1> to <4>, wherein the (A) polycarbonate resin further contains a structural unit represented by formula (2) below;

Formula (2)

[Chemical Formula 3]

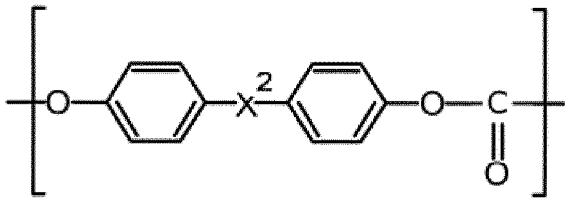

in formula (2), $X^2$ represents either one of structures below:

[Chemical Formula 4]

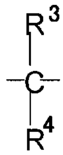 , 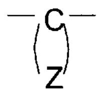

each of $R^3$ and $R^4$ independently represents a hydrogen atom or a methyl group, and Z represents a group that combines with C to form an optionally substituted alicyclic hydrocarbon group having 6 to 12 carbon atoms.

<7> The resin composition of <6>, wherein the (A) polycarbonate resin contains, relative to the total structural units, 50 to 95 mol% of the structural unit represented by formula (1), and 50 to 5 mol% of the structural unit represented by formula (2).

<8> The resin composition of <6>, wherein the (A) polycarbonate resin contains, relative to the total structural units, 60 to 90 mol% of the structural unit represented by formula (1), and 40 to 10 mol% of structural unit represented by formula (2).

<9> The resin composition of any one of <1> to <8>, wherein the resin composition is free from inorganic filler, or contains 8 parts by mass or less of the inorganic filler, per 100 parts by mass of the (A) polycarbonate resin.

<10> The resin composition of any one of <1> to <9>, wherein the specimen having a thickness of 2 mm and formed from the resin composition has a Δ haze, which is a difference between haze values measured before and after initial reciprocating abrasion test against bleached cotton cloth, of 3.00% or smaller.

<11> A molded article formed from the resin composition described in any one of <1> to <10>.

## ADVANTAGEOUS EFFECTS OF INVENTION

According to this invention, it now became possible to provide a resin composition that excels in surface hardness and scratch resistance, and particularly excels in retention ratio of transparency after abrasion test and in extrudability, as well as to provide a molded article using the resin composition.

## DESCRIPTION OF EMBODIMENTS

This invention will be detailed below. Note that all numerical ranges given in this specification, using "to" preceded and succeeded by numerals, are understood to represent the ranges including these numerals respectively as the lower and upper limit values.

The resin composition of this invention contains 0.4 to 10.0 parts by mass of the (B) ester compound, per 100 parts by mass of the (A) polycarbonate resin; the (A) polycarbonate resin contains 50 to 100 mol%, relative to the total structural units, of a structural unit represented by formula (1) below; a specimen having a thickness of 2 mm and formed from the resin composition has a haze of 5.0% or smaller, and a dynamic friction coefficient of 0.35 or smaller when measured under a load of 30 N according to ISO 19252;

Formula (1)

[Chemical Formula 5]

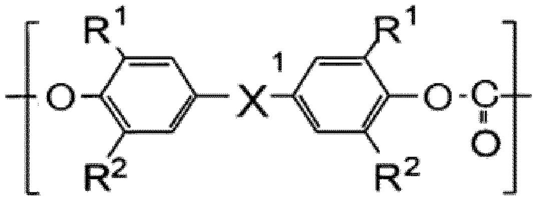

in formula (1), each $R^1$ represents a methyl group, each $R^2$ represents a hydrogen atom or a methyl group, $X^1$ represents either one of structures below:

[Chemical Formula 6]

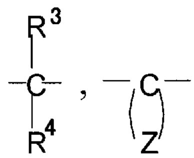

where, each of $R^3$ and $R^4$ independently represents a hydrogen atom or a methyl group, and Z represents a group that combines with C to form an optionally substituted alicyclic hydrocarbon group having 6 to 12 carbon atoms.

With such structure, it now becomes possible to provide a resin composition that excels in scratch resistance, particularly excels in retention of high transparency even after abrasion test, and in extrudability.

This invention will be detailed below.

<(A) Polycarbonate Resin>

The polycarbonate resin used in this invention contains 50 to 100 mol%, relative to the total structural units, of a structural unit represented by formula (1).

[Chemical Formula 7]

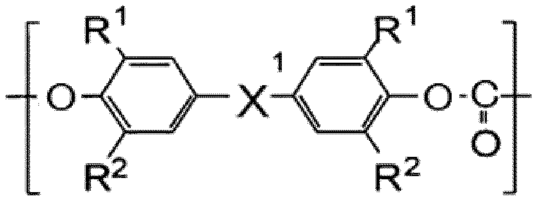

In formula (1), each $R^1$ represents a methyl group, each $R^2$ represents a hydrogen atom or a methyl group, $X^1$ represents either one of structures below:

[Chemical Formula 8]

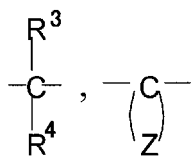

where, each of $R^3$ and $R^4$ independently represents a hydrogen atom or a methyl group, and Z represents a group that combines with C to form an optionally substituted alicyclic hydrocarbon group having 6 to 12 carbon atoms.

Two ($R^2$)s in formula (1) may be same or different, and are preferably same. $R^2$ preferably represents a hydrogen

atom.

When $X^1$ in formula (1) represents the structure below:

[Chemical Formula 9]

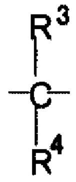

at least one of $R^3$ or $R^4$ preferably represents a methyl group. It is more preferable that both of them represent methyl group.

When $X^1$ represents the structure below:

[Chemical Formula 10]

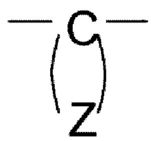

where, Z combines with C (carbon) that is bound to two phenyl groups in formula (1) to form a divalent alicyclic hydrocarbon group having 6 to 12 carbon atoms. The divalent alicyclic hydrocarbon group is exemplified by cycloalkylidene groups such as cyclohexylidene group, cycloheptylidene group, cyclododecylidene group, adamantylidene group, and cyclododecylidene group. The substituted forms are exemplified by methyl substituted form and ethyl substituted form of these groups. Among them, preferred are cyclohexylidene group, methyl substituted form (preferably 3,3,5-trimethyl substituted form) of cyclohexylidene, and cyclododecylidene group.

In formula (1), $X^1$ preferably represent the structure below:

[Chemical Formula 11]

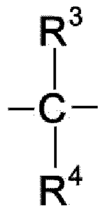

The (A) polycarbonate resin in this invention contains the structural unit represented by formula (1) which amounts 50 mol% or more, preferably 60 mol% or more, and more preferably 70 mol% or more, relative to the total structural units. The upper limit value is 100 mol% or smaller, which is more preferably 95 mol% or smaller, more preferably 90 mol% or smaller, even more preferably 85 mol% or smaller, and yet more preferably 80 mol% or smaller.

The (A) polycarbonate resin in this invention may contain only one kind of the structural unit represented by formula (1), or may contain two more kinds. If two or more kinds are contained, the total content preferably falls within the aforementioned ranges.

Specific examples of the preferred structural unit represented by formula (1) are exemplified by i) to iv) below:

i) a structural unit composed of 2,2-bis(3-methyl-4-hydroxyphenyl)propane, that is, a structural unit in which each $R^1$ represents a methyl group, each $R^2$ represents a hydrogen atom, and $X^1$ represents $-C(CH_3)_2-$;

ii) a structural unit composed of 2,2-bis(3,5-dimethyl-4-hydroxyphenyl)propane, that is, a structural unit in which each $R^1$ represents a methyl group, each $R^2$ represents a methyl group, and $X^1$ represents $-C(CH_3)_2-$;

iii) a structural unit composed of 2,2-bis(3-methyl-4-hydroxyphenyl)cyclohexane, that is, a structural unit in which each $R^1$ represents a methyl group, each $R^2$ represents a hydrogen atom, and $X^1$ represents a cyclohexylidene

group; and

iv) a structural unit composed of 2,2-bis(3-methyl-4-hydroxyphenyl)cyclododecane, that is, a structural unit in which each $R^1$ represents a methyl group, each $R^2$ represents a hydrogen atom, and $X^1$ represents a cyclododecylidene group.

Among them, i), ii) and iii) are preferable; i) and iii) are more preferable; and i) is even more preferable.

The (A) polycarbonate resin in this invention may have a structural unit other than the structural unit represented by formula (1). Such other structural unit is preferably a structural unit represented by formula (2) below:

Formula (2)

[Chemical Formula 12]

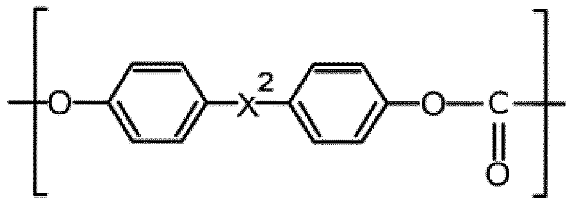

in formula (2), $X^2$ represents either one of structures below:

[Chemical Formula 13]

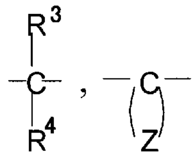

where, each of $R^3$ and $R^4$ independently represents a hydrogen atom or a methyl group, and Z represents a group that combines with C to form an optionally substituted alicyclic hydrocarbon group having 6 to 12 carbon atoms.

The alicyclic hydrocarbon group formed by combination of Z with C is exemplified by cycloalkylidene groups such as cyclohexylidene group, cycloheptylidene group, cyclododecylidene group, adamantylidene group, and cyclododecylidene group. The substituted alicyclic hydrocarbon group formed by combination of Z with C is exemplified by methyl substituted form and ethyl substituted form of the aforementioned alicyclic hydrocarbon groups. Among them, cyclohexylidene group, methyl substituted form (preferably 3,3,5-trimethyl substituted form) of cyclohexylidene group, and cyclododecylidene group are preferable.

Preferred range of $X^2$ in formula (2) is synonymous to that of $X^1$ in formula (1). That is, $X^2$ in formula (2) preferably has the structure below:

[Chemical Formula 14]

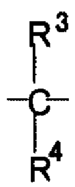

where, at least one of $R^3$ or $R^4$ preferably represents a methyl group. It is more preferable that both of them represent methyl group.

A preferred specific example of the structural unit represented by formula (2) above is 2,2-bis(4-hydroxyphenyl)propane, that is, a structural unit composed of bisphenol-A (carbonate structural unit).

In this invention, content of the structural unit represented by formula (2), relative to the total structural units, is preferably 5 mol% or more, more preferably 10 mol% or more, even more preferably 5 mol% or more, and yet more

preferably 20 mol% or more. Meanwhile, content of the structural unit represented by formula (2), relative to the total structural units, is preferably 50 mol% or less, more preferably 40 mol% or less, even more preferably 30 mol% or less, and yet more preferably 25 mol% or less.

The (A) polycarbonate resin in this invention may be free from the structural unit represented by formula (2), may contain only one kind thereof, or two or more kinds thereof. When two or more kinds are contained, the total content preferably falls within the aforementioned ranges.

The (A) polycarbonate resin in this invention may contain a dihydroxy compound for composing a structural unit other than the structural unit represented by formula (1) and the structural unit represented by formula (2). The dihydroxy compound is exemplified by aromatic dihydroxy compounds as enumerated below: bis(4-hydroxyphenyl)methane, 2,2-bis(4-hydroxyphenyl)butane, 2,2-bis(4-hydroxyphenyl)pentane, 2,2-bis(4-hydroxyphenyl)-4-methylpentane, 2,2-bis(4-hydroxy-3-methylphenyl)propane, 2,2-bis(4-hydroxy-3,5-dimethylphenyl)propane, 2,2-bis(4-hydroxy-3-(1-methylethyl)phenyl)propane, 2,2-bis(4-hydroxy-3-tert-butylphenyl)propane, 2,2-bis(4-hydroxy-3-(1-methylpropyl)phenyl)propane, 2,2-bis(4-hydroxy-3-cyclohexylphenyl)propane, 2,2-bis(4-hydroxy-3-phenylphenyl)propane, 1,1-bis(4-hydroxyphenyl)decane, 1,1-bis(4-hydroxyphenyl)cyclohexane, 1,1-bis(4-hydroxyphenyl)-1-phenylethane, 1,1-bis(4-hydroxyphenyl)phenylmethane, 1,1-bis(4-hydroxy-3-methylphenyl)cyclohexane, 1,1-bis(4-hydroxy-3,5-dimethylphenyl)cyclohexane, 1,1-bis(4-hydroxy-3-(1-methylethyl)phenyl)cyclohexane, 1,1-bis(4-hydroxy-3-tert-butylphenyl)cyclohexane, 1,1-bis(4-hydroxy-3-(1-methylpropyl)phenyl)cyclohexane, 1,1-bis(4-hydroxy-3-cyclohexylphenyl)cyclohexane, 1,1-bis(4-hydroxy-3-phenylphenyl)cyclohexane, 1,1-bis(4-hydroxy-3-methylphenyl)-1-phenylethane, 1,1-bis(4-hydroxy-3,5-dimethylphenyl)-1-phenylethane, 1,1-bis(4-hydroxy-3-(1-methylethyl)phenyl)-1-phenylethane, 1,1-bis(4-hydroxy-3-tert-butylphenyl)-1-phenylethane, 1,1-bis(4-hydroxy-3-(1-methylpropyl)phenyl)-1-phenylethane, 1,1-bis(4-hydroxy-3-cyclohexylphenyl)-1-phenylethane, 1,1-bis(4-hydroxy-3-phenylphenyl)-1-phenylethane, 1,1-bis(4-hydroxyphenyl)cyclopentane, 1,1-bis(4-hydroxyphenyl)cyclooctane, 4,4'-(1,3-phenylenediisopropylidene)bisphenol, 4,4'-(1,4-phenylenediisopropylidene)bisphenol, 9,9-bis(4-hydroxyphenyl)fluorene, 9,9-bis(4-hydroxy-3-methylphenyl)fluorene, 4,4'-dihydroxybenzophenone, 4,4'-dihydroxyphenyl ether, 4,4'-dihydroxybiphenyl, 1,1-bis(4-hydroxyphenyl)-3,3,5-trimethylcyclohexane, and 1,1-bis(4-hydroxy-6-methyl-3-tert-butylphenyl)butane.

An embodiment of such other structural unit is also exemplified by the structural unit represented by formula (1) described in paragraph [0008] of WO2017/099226 pamphlet. Also descriptions in paragraphs [0043] to [0052] of WO2017/099226 pamphlet may be referred to.

Another embodiment of such other structural unit is also exemplified by the structural unit represented by formula (3) below: Formula (3)

[Chemical Formula 15]

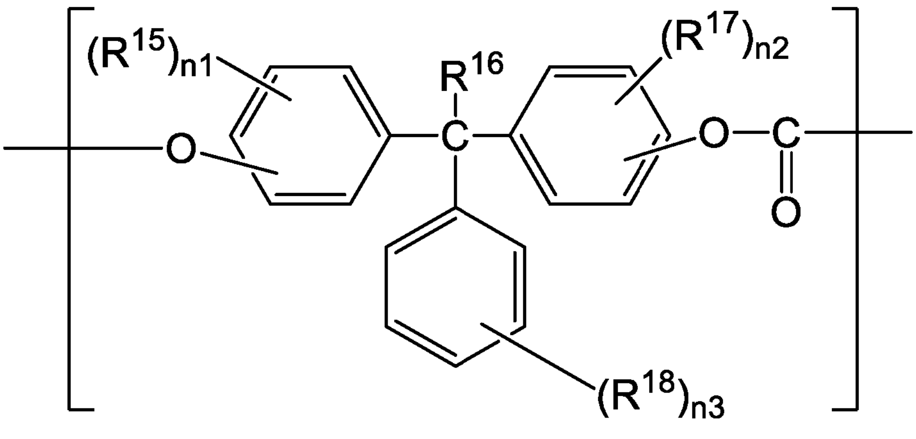

(3)

In formula (3), each of $R^{15}$ to $R^{18}$ independently represents a hydrogen atom, fluorine atom, chlorine atom, bromine atom, iodine atom, alkyl group having 1 to 9 carbon atoms, aryl group having 6 to 12 carbon atoms, alkoxy group having 1 to 5 carbon atoms, alkenyl group having 2 to 5 carbon atoms, or aralkyl group having 7 to 17 carbon atoms; and each of n1, n2 and n3 independently represents an integer of 0 to 4.

For details of the structural unit represented by formula (3), the description of JP-A-2011-046769 may be referred to.

In the (A) polycarbonate resin, content of the structural unit other than the structural unit represented by formula (1) and the structural unit represented by formula (2), relative to the total structural units, is preferably 30 mol% or less, more preferably 20 mol% or less, even more preferably 10 mol% or less, yet more preferably 5 mol% or less, and may even be 1 mol% or less.

Embodiments of the (A) polycarbonate resin in this invention are as follows:

(1) a polycarbonate resin in which the structural unit represented by formula (1) accounts for 50 to 100 mol% of the total structural units; and

(2) a polycarbonate resin in which the structural unit represented by formula (1) accounts for 50 to 95 mol% (preferably 60 to 90 mol%), and the structural unit other than the structural unit represented by formula (1) (preferably the structural unit represented by formula (2)) accounts for 50 to 5 mol% (preferably 40 to 10 mol%) of the total structural units.

In a case where the polycarbonate resin used in this invention contains the structural unit other than the structural unit represented by formula (1) (preferably the structural unit represented by formula (2)), possible modes of blending are as follows:

· a mixture of a polycarbonate resin (A1) in which the structural unit represented by formula (1) accounts for 50 mol% or more (preferably, 70 mol% or more, 95 mol% or more) of the total structural units, and a polycarbonate resin (A2) in which the structural unit represented by formula (2) accounts for 95 mol% or more of the total structural units;

· a copolymerized polycarbonate resin (A3) in which the total of the structural unit represented by formula (1) and the structural unit represented by formula (2) accounts for 95 mol% or more of the total structural units;

· a mixture of the polycarbonate resin (A1), the polycarbonate resin (A2), and the copolymerized polycarbonate resin (A3);

· a mixture of the polycarbonate resin (A1) and the copolymerized polycarbonate resin (A3);

· a mixture of the copolymerized polycarbonate resin (A3) and the polycarbonate resin (A2); and

· a mixture of any of the aforementioned embodiments, containing two or more kinds of at least one of the polycarbonate resin (A1), the polycarbonate resin (A2) and the copolymerized polycarbonate resin (A3).

In any embodiment, it suffices that the structural unit represented by formula (1) amounts 50 mol% to 100 mol% in the (A) polycarbonate resin. It is more preferable that the structural unit represented by formula (1) and the structural unit represented by formula (2) are contained to satisfy the aforementioned preferred ranges of content, relative to the total structural units.

Among the aforementioned modes of blending, particularly preferable in this invention is the embodiments that contain the (A1) polycarbonate resin and the (A2) polycarbonate resin. When the (A1) polycarbonate resin and the (A2) polycarbonate resin are contained, ratio of mixing on a mass basis is preferably 50:50 to 95:5, more preferably 60:40 to 90:10, even more preferably 70:30 to 85:15, and yet more preferably 75:25 to 80:20. The resin composition of this invention may contain only one kind of each of the (A1) polycarbonate resin and the (A2) polycarbonate resin, or may contain two or more kinds. When two or more kinds are contained, the total content preferably falls within the aforementioned ranges. With such structure, the pencil hardness will become B to 2H.

The (A) polycarbonate resin in this invention preferably has a viscosity-average molecular weight (Mv) of 9,000 or larger at lowest, which is more preferably 10,000 or larger, and even more preferably 12,000 or larger. The upper limit value of Mv is preferably 32,000 or smaller, more preferably 30,000 or smaller, and even more preferably 28,000 or smaller.

With the viscosity-average molecular weight controlled to the aforementioned lower limit values or larger, the obtainable molded article will have improved moldability and larger mechanical strength. Meanwhile, with the upper limit value controlled to the aforementioned upper limit values or below, the molded article will have improved fluidity, and even a thin molded article will be manufactured efficiently.

The viscosity-average molecular weight (Mv) is measured according to a method described later in EXAMPLE (for Mv, the same will apply hereinafter). In a case where two or more kinds of the (A) polycarbonate resin are contained, Mv is determined by summing up the viscosity-average molecular weights of the individual polycarbonate resins after multiplied by the individual mass percentages. The viscosity-average molecular weight hereinafter will be discussed in the same way.

The (A) polycarbonate resin typically has a pencil hardness, measured according to ISO 15184, of 3B to 2H, which is preferably B to 2H, and is more preferably HB to 2H. The pencil hardness is measured according to a method described later in EXAMPLE (for pencil hardness, the same will apply hereinafter). When two or more kinds of the (A) polycarbonate resin are contained, the pencil hardness of the mixture preferably falls within the aforementioned ranges.

The (A) polycarbonate resin may be manufactured by any of known methods without special limitation. The method is exemplified by interfacial polymerization, melt transesterification, pyridine method, ring-opening polymerization of cyclic carbonate compound, and solid-phase transesterification of prepolymer. Among them, interfacial polymerization and melt transesterification are preferable.

The resin composition of this invention preferably contains 80% by mass or more of the (A) polycarbonate resin, where the content is more preferably 85% by mass or more relative to the composition, even more preferably 90%

by mass, and yet more preferably 93% by mass or more. The upper limit of content of the (A) polycarbonate resin is typically, but not limitedly, 99.4% by mass or below.

The resin composition of this invention may contain only one kind of the (A) polycarbonate resin, or may contain two or more kinds. When two or more kinds are contained, the total content preferably falls within the aforementioned ranges.

<(B) Ester Compound>

The resin composition of this invention contains the (B) ester compound. The (B) ester compound used in this invention is composed of an alcohol and a carboxylic acid, and is suitably selectable from known ester compounds without special limitation on their kinds.

An embodiment of the ester compound in this invention is exemplified by fatty acid ester, and is more specifically exemplified by an ester compound formed from a saturated straight-chain carboxylic acid and a saturated straight-chain alcohol. Preferred embodiments of the ester compound in this invention will be specifically explained below. Among them, monoester compound is particularly preferable.

A first embodiment of the (B) ester compound in this invention is a monoester compound formed from a monocarboxylic acid and a monohydric alcohol, consequently having a single ester group. With such reduced number of ester group, the obtainable molded article will successfully have improved transparency.

The monoester compound used in this invention preferably has a hydroxyl value of 100 mgKOH/g or smaller and/or 42 or more carbon atoms.

With small hydroxyl value, the monoester compound and the polycarbonate resin will become less likely to decompose during extrusion, so that generation of gas during molding may be suppressed effectively. The hydroxyl value is more preferably 80 mgKOH/g or smaller, even more preferably 50 mgKOH/g or smaller, and yet more preferably 35 mgKOH/g or smaller.

The hydroxyl value is measured according to a method described later in EXAMPLE.

It also becomes possible to suppress in this invention to effectively suppress the gas generation during extrusion and molding, by using the monoester compound having a predetermined number or more of carbon atoms.

The monoester compound preferably has 42 or more carbon atoms, which is more preferably 44 or more. The upper limit of the number of carbon atoms of the monoester compound is preferably, but not limitedly, 100 or smaller, and is more preferably 90 or smaller. The number of carbon atoms of the monoester compound means the total number of carbon atoms contained in one molecule. Hence, for a monoester compound formed from a monocarboxylic acid and a monohydric alcohol, the total number of carbon atoms contained in the monocarboxylic acid and in the monohydric alcohol will give the number of carbon atoms of the monoester compound.

When two or more kinds of the monoester compound are contained, the number of carbon atoms is determined by summing up the number of carbon atoms of the individual monoester compounds after multiplied by the individual mass percentages.

The monoester compound used in this invention preferably has a molecular weight of 2000 or smaller, which is more preferably 1500 or smaller, and even more preferably 1200 or smaller. With such structure, obtainable is a molded article more suitably balanced between high transparency and high nail scratch resistance. The structure and other aspects will be detailed later.

The monoester compound used in this invention may have a straight-chain structure or a branched structure, and preferably has a straight-chain structure having alkyl groups with 15 or more carbon atoms (preferably alkyl groups each having 15 to 30 carbon atoms) on both terminals. Employment of such structure makes it more likely to obtain the molded article more suitably balanced between high transparency and high nail scratch resistance.

Next, the carboxylic acid will be explained.

In this invention, the carboxylic acid may be any monocarboxylic acid selectable from saturated fatty acid, unsaturated fatty acid and aromatic carboxylic acid, and may have a branched structure. The carboxylic acid in this invention is preferably a saturated fatty acid, and particularly a straight-chain saturated fatty acid.

The carboxylic acid may have a substituent or may be free from substituent, and is preferably free from substituent. Without substituent, the obtainable molded article tends to have improved transparency.

The carboxylic acid is preferably composed only of oxygen atom, carbon atom and hydrogen atom. The carboxylic acid preferably has 2 to 45 carbon atoms, the number of carbon atoms is more preferably 10 to 40, even more preferably 15 to 36, and particularly 20 to 30.

The carboxylic acid (numeral in the parentheses stands for the number of carbon atoms) is specifically exemplified by lauric acid (saturated C12), myristic acid (saturated C14), palmitic acid (saturated C16), stearic acid (saturated C18), oleic acid (unsaturated C18), linoleic acid (unsaturated C18), arachidic acid (saturated C20), eicosenoic acid (unsaturated C20), behenic acid (saturated C22), erucic acid (unsaturated C22), lignoceric acid (saturated C24), cerotic acid (saturated C26), montanic acid (saturated C28), and melissic acid (saturated C30).

Next, the alcohol will be explained.

The alcohol in this invention is preferably a monohydric alcohol which may be any of saturated alcohol, unsaturated alcohol and aromatic alcohol, and may have a branched structure. The alcohol in this invention is preferably saturated alcohol, and particularly straight-chain saturated alcohol.

The alcohol may have a substituent or may be free from substituent, and is preferably free from substituent. Without substituent, the obtainable molded article tends to have improved transparency.

The alcohol is preferably composed only of oxygen atom, carbon atom and hydrogen atom.

The alcohol preferably has 2 to 45 carbon atoms, and more preferably has 5 to 36 carbon atoms.

The alcohol (numeral in the parentheses stands for the number of carbon atoms) is specifically exemplified by octanol (saturated C8), dodecanol (saturated C12), stearyl alcohol (saturated C18), oleyl alcohol (unsaturated C18), behenyl alcohol (saturated C22), erucyl alcohol (unsaturated C22), and montanyl alcohol (saturated C28).

In the monoester compound, difference between the number of carbon atoms in the carboxylic acid and the number of carbon atoms in the alcohol is preferably 6 or smaller, more preferably 4 or smaller, may be 3 or smaller, even may be 2 or smaller, and yet may be zero, or indicating the same number of carbon atoms.

The monoester compound used in this invention (numeral in the parentheses stands for the number of carbon atoms) is specifically exemplified by behenyl behenate (C44), montanyl montanate (C56), stearyl montanate (C46), montanyl stearate (C46), behenyl montanate (C50), and montanyl behenate (C50). Montanyl montanate (C56) and behenyl behenate (C44) are particularly preferable.

The monoester compound used in this invention, which often exists in the form of mixture of a plurality of compounds with different number of carbon atoms, is now defined in this invention to be an ester compound contained as a major ingredient (which preferably accounts for 50% by mass or more, and more preferably 70% by mass or more).

A second embodiment of the (B) ester compound in this invention is a diester compound.

The diester compound used in this invention is preferably a diester compound obtained from a polycarboxylic acid and a monohydric alcohol (preferably a monohydric alcohol having 16 or more carbon atoms, and more preferably a monohydric alcohol having 16 to 50 carbon atoms) ; a diester compound obtained from a polyhydric alcohol and a monocarboxylic acid (preferably monocarboxylic acid having 16 or more carbon atoms, and more preferably a monocarboxylic acid having 16 to 50 carbon atoms); or a mixture thereof.

With the diester compound contained therein, the resin composition of this invention can suppress the polycarbonate resin from decomposing, can effectively suppress gas from generating during molding, and will be improved in the compatibility with the polycarbonate resin. Hence the obtainable resin composition will be able to yield a molded article that excels in extrudability, transparency, and nail scratch resistance measured both initially, and after being wiped with a cotton cloth impregnated with ethanol.

The diester compound is preferably a diester compound composed of a dicarboxylic acid and a monohydric alcohol; a diester compound composed of a monocarboxylic acid and a dihydric alcohol; or a mixture thereof. Each of the monocarboxylic acid and the monohydric alcohol may contain aliphatic structure, alicyclic structure and/or aromatic structure, where each of them preferably contains aliphatic structure and/or alicyclic structure. Each of the monocarboxylic acid and the monohydric alcohol is preferably composed of a straight-chain or branched aliphatic structure or alicyclic structure, as well as a carboxy group or hydroxy group.

Each of the monohydric alcohol and the monovalent carboxylic acid has 16 or more carbon atoms, may have 18 or more carbon atoms, and even may have 20 or more carbon atoms. The upper limit value of the number of carbon atoms of each of the monohydric alcohol and the monocarboxylic acid preferably is preferably 50 or smaller, which is more preferably 40 or smaller, even more preferably 32 or smaller, yet more preferably 30 or smaller, and may be 28 or smaller.

Each of the dicarboxylic acid and the dihydric alcohol may contain aliphatic structure, alicyclic structure and/or aromatic structure, and preferably contains aliphatic structure and/or alicyclic structure.

Each of the dicarboxylic acid and the dihydric alcohol is preferably composed of a straight-chain or branched aliphatic structure or alicyclic structure, as well as a carboxy group or hydroxy group. The number of carbon atoms of each of the dicarboxylic acid and the dihydric alcohol is preferably 3 or larger, more preferably 4 or larger, even more preferably 5 or larger, and yet more preferably 6 or larger. The number of carbon atoms of each of the dicarboxylic acid and the dihydric alcohol is preferably 10 or smaller, and more preferably 8 or smaller.

In particular, the diester compound used in this invention is preferably a diester compound obtained from a dicarboxylic acid having 3 to 10 carbon atoms and a monohydric alcohol having 16 to 40 carbon atoms, or a diester compound obtained from a dihydric alcohol having 3 to 10 carbon atoms and a monocarboxylic acid having 16 to 40 carbon atoms, or a mixture thereof; more preferably a diester compound obtained from a dicarboxylic acid having 3 to 10 carbon atoms and a monohydric alcohol having 16 to 30 carbon atoms, or a diester compound obtained from a dihydric alcohol having 3 to 10 carbon atoms and a monocarboxylic acid having 16 to 30 carbon atoms, or a mixture thereof; and even more preferably a diester compound obtained from a dicarboxylic acid having 3 to 10 carbon atoms and a monohydric alcohol having 16 to 30 carbon atoms, or a mixture thereof.

Moreover, in the diester compound used in this invention composed of the dicarboxylic acid and the monohydric alcohol, the number of carbon atoms of the monohydric alcohol is preferably larger by at least 10 than the number of carbon atoms of the dicarboxylic acid, and is preferably larger by 10 to 20. Alternatively, in the diester compound used in this invention composed of the monocarboxylic acid the dihydric alcohol, the number of carbon atoms of the dihydric alcohol is preferably larger by at least 10 than the number of carbon atoms of the monocarboxylic acid, and is preferably larger by 10 to 20. With such structures, the resin composition will be less likely to produce gas during extrusion and molding, and thereby the molded article tends to have improved appearance and physical properties.

The monocarboxylic acid (numeral in the parentheses stands for the number of carbon atoms) is specifically exemplified by behenic acid (22), lignoceric acid (24), cerotic acid (26), montanic acid (28), and melissic acid (30).

The monohydric alcohol (numeral in the parentheses stands for the number of carbon atoms) is specifically exemplified by stearyl alcohol (18), behenyl alcohol (22) and montanyl alcohol (28).

The dicarboxylic acid (numeral in the parentheses stands for the number of carbon atoms) is specifically exemplified by oxalic acid (2), malonic acid (3), succinic acid (4), glutaric acid (5), adipic acid (6), pimelic acid (7), suberic acid (8), azelaic acid (9), sebacic acid (10), phthalic acid (8), isophthalic acid (8), terephthalic acid (8), 1,4-cyclohexanedicarboxylic acid (8), 1,3-cyclohexanedicarboxylic acid (8), and 1,2-cyclohexanedicarboxylic acid (8).

The dihydric alcohol (numeral in the parentheses stands for the number of carbon atoms) is specifically exemplified by ethylene glycol (2), propylene glycol (3), tetramethylene glycol (4), diethylene glycol (4), 1,4-benzenedimethanol (8), and 1,4-cyclohexanedimethanol (8).

The diester compound preferably has a hydroxyl value of 100 mgKOH/g or smaller, which is more preferably 70 mgKOH/g or smaller, even more preferably 50 mgKOH/g or smaller, and yet more preferably 10 mgKOH/g or smaller. The lower limit value of the hydroxyl value of the diester compound is typically, but not limitedly, 1 mgKOH/g or larger. With the hydroxyl value of the diester compound controlled to 100 mgKOH/g or smaller, the polycarbonate resin will be effectively suppressed from decomposing, the resin composition will be suppressed from generating gas during extrusion and molding, thereby the molded article tends to have improved appearance and physical properties.

According to this embodiment, the molded article obtained from the composition of this invention also excels in nail scratch resistance measured after being wiped with a cotton cloth impregnated with ethanol.

The diester compound used in this invention, which often exists in the form of mixture of a plurality of compounds with different number of carbon atoms, is now defined in this invention to be an ester compound contained as a major ingredient (which preferably accounts for 50% by mass or more, and more preferably 70% by mass or more).

The molecular weight is preferably 2000 or smaller, more preferably 1800 or smaller, even more preferably 1400 or smaller, yet more preferably 1000 or smaller, and furthermore preferably 900 or smaller. The lower limit value is preferably 200 or larger, and more preferably 500 or larger. With the molecular weight of the diester compound controlled within the aforementioned ranges, the obtainable molded article will be excellently balanced between high transparency and high nail scratch resistance. The molecular weight of the ester compound, when being a mixture, is given by number-average molecular weight.

The diester compound used in this invention, which often exists in the form of mixture of a plurality of compounds with different number of carbon atoms, is now defined in this invention to be an ester compound contained as a major ingredient (which preferably accounts for 50% by mass or more, and more preferably 70% by mass or more).

A third embodiment of the ester compound of this invention is a triester compound.

The triester compound used in this invention is preferably an ester compound obtained from a polycarboxylic acid and a monohydric alcohol having 20 or more carbon atoms (preferably having 20 to 50 carbon atoms); an ester compound obtained from a polyhydric alcohol and a monocarboxylic acid having 20 or more carbon atoms (preferably having 20 to 50 carbon atoms); or a mixture thereof.

With the triester compound contained therein, the resin composition of this invention can suppress the polycarbonate resin from decomposing, can effectively suppress gas from generating during molding, and will be improved in the compatibility with the polycarbonate resin. Hence the obtainable resin composition will be able to yield a molded article that excels in extrudability, transparency, and nail scratch resistance measured both initially, and after being wiped with a cotton cloth impregnated with ethanol.

The triester compound is preferably a triester compound composed of a tricarboxylic acid and a monohydric alcohol, a triester compound composed of a monocarboxylic acid and a trihydric alcohol, or a mixture thereof.

Each of the monohydric alcohol and the monocarboxylic acid may contain at least one of aliphatic structure, alicyclic structure and aromatic structure, and preferably contains aliphatic structure and/or alicyclic structure. Each of the monohydric alcohol and the monocarboxylic acid is preferably composed of a straight-chain or branched aliphatic structure or alicyclic structure, as well as a carboxy group or hydroxy group.

Each of the monohydric alcohol and the monocarboxylic acid preferably has 20 or more carbon atoms, and more preferably has 21 or more carbon atoms. The upper limit value of the number of carbon atoms is preferably 50 or smaller, more preferably 40 or smaller, even more preferably 32 or smaller, and yet more preferably 30 or smaller.

Each of the tricarboxylic acid and the trihydric alcohol may contain at least one of aliphatic structure, alicyclic

structure and aromatic structure, and preferably contains aliphatic structure and/or alicyclic structure.

Each of the tricarboxylic acid and the trihydric alcohol is preferably composed of a straight-chain or branched aliphatic structure or alicyclic structure, as well as a carboxy group or hydroxy group. The number of carbon atoms of each of the tricarboxylic acid and the trihydric alcohol is preferably 3 or larger. Meanwhile, the number of carbon atoms of each of the tricarboxylic acid and the trihydric alcohol is preferably 10 or smaller, and more preferably 8 or smaller.

In particular, the triester compound used in this invention is preferably a triester compound obtained from a tricarboxylic acid having 3 to 10 carbon atoms and a monohydric alcohol having 20 to 40 carbon atoms, or a triester compound obtained from a trihydric alcohol having 3 to 10 carbon atoms and a monocarboxylic acid having 20 to 40 carbon atoms, or a mixture of two or more kinds thereof; and is more preferably a triester compound obtained from a tricarboxylic acid having 3 to 10 carbon atoms and a monohydric alcohol having 20 to 30 carbon atoms, a triester compound obtained from a trihydric alcohol having 3 to 10 carbon atoms and a monocarboxylic acid having 20 to 30 carbon atoms, or a mixture of two or more kinds thereof; and even more preferably a triester compound obtained from a trihydric alcohol having 3 to 10 carbon atoms and a monocarboxylic acid having 20 to 30 carbon atoms, or a mixture of two or more kinds of them.

Moreover, in the triester compound used in this invention composed of a trihydric alcohol and a monocarboxylic acid, the number of carbon atoms of the monocarboxylic acid is preferably larger by at least 10 than the number of carbon atoms of the trihydric alcohol, which is more preferably larger by 10 to 20. With such structure, the resin composition will be less likely to produce gas during extrusion and molding, and thereby the molded article tends to have improved appearance and physical properties.

The monocarboxylic acid having 20 or more carbon atoms (numeral in the parentheses stands for the number of carbon atoms) is specifically exemplified by behenic acid (22), lignoceric acid (24), cerotic acid (26), montanic acid (28), and melissic acid (30).

The monohydric alcohol having 20 or more carbon atoms (numeral in the parentheses stands for the number of carbon atoms) is specifically exemplified by behenyl alcohol (22) and montanyl alcohol (28).

The tricarboxylic acid (numeral in the parentheses stands for the number of carbon atoms) is specifically exemplified by tricarballylic acid (6), 1,2,3-benzenetricarboxylic acid (9), 1,3,5-benzenetricarboxylic acid (9), 1,2,4-benzenetricarboxylic acid (9), 5-methyl-1,2,4-benzenetricarboxylic acid (10), 1,2,3-cyclohexanetricarboxylic acid (9), 1,3,5-cyclohexanetricarboxylic acid (9), and 1,2,4-cyclohexanetricarboxylic acid (9).

The trihydric alcohol (numeral in the parentheses stands for the number of carbon atoms) is specifically exemplified by glycerin (3), trimethylolpropane (6), trimethylolethane (5), triethylolethane (8), 1,2,4-butanetriol (4), hydroxyquinol (6), phloroglucinol (6), pyrogallol (6), and 1,2,4-cyclohexanetriol (6).

The triester compound preferably has a hydroxyl value of 100 mgKOH/g or smaller, which is more preferably 70 mgKOH/g or smaller, more preferably 50 mgKOH/g or smaller, and even more preferably 10 mgKOH/g or smaller. The lower limit value of the hydroxyl value of the triester compound is typically, but not limitedly, 1 mgKOH/g or larger. With the hydroxyl value of the triester compound controlled to 100 mgKOH/g or smaller, the polycarbonate resin will be effectively suppressed from decomposing, the resin composition will be suppressed from generating gas during extrusion and molding, thereby the molded article tends to have improved appearance and physical properties.

According to this embodiment, the molded article obtained from the composition of this invention also excels in nail scratch resistance measured after being wiped with a cotton cloth impregnated with ethanol.

The triester compound used in this invention preferably has a molecular weight of 2000 or smaller, which is more preferably 1800 or smaller, and even more preferably 1400 or smaller. The lower limit value is preferably 1000 or larger. With the molecular weight of the triester compound controlled within the aforementioned ranges, the obtainable molded article will be excellently balanced between high transparency and high nail scratch resistance.

The trister compound used in this invention, which often exists in the form of mixture of a plurality of compounds with different number of carbon atoms, is now defined in this invention to be an ester compound contained as a major ingredient (which preferably accounts for 50% by mass or more, and more preferably 70% by mass or more).

A fourth embodiment of the (B) ester compound in this invention is a tetraester compound.

The tetraester compound used in this invention is preferably an ester compound obtained from a polycarboxylic acid and a monohydric alcohol having 20 or more carbon atoms (preferably having 20 to 50 carbon atoms), an ester compound obtained from a polyhydric alcohol and a monocarboxylic acid having 20 or more carbon atoms (preferably having 20 to 50 carbon atoms), or a mixture of both ester compounds.

With the tetraester compound contained therein, the resin composition of this invention can suppress the polycarbonate resin from decomposing, can effectively suppress gas from generating during molding, and will be improved in the compatibility with the polycarbonate resin. Hence the obtainable resin composition will be able to yield a molded article that excels in extrudability, transparency, and nail scratch resistance measured both initially, and after being wiped with a cotton cloth impregnated with ethanol.

The tetraester compound is preferably a tetraester compound composed of a tetracarboxylic acid and a monohydric alcohol, a tetraester compound composed of a monocarboxylic acid and a tetrahydric alcohol, or a mixture thereof.

Each of the monohydric alcohol and the monocarboxylic acid may contain at least one of aliphatic structure, alicyclic structure and aromatic structure, and preferably contains aliphatic structure and/or alicyclic structure. Each of the monohydric alcohol and the monocarboxylic acid is preferably composed of a straight-chain or branched aliphatic structure or alicyclic structure, as well as a carboxy group or hydroxy group.

Each of the monohydric alcohol and the monocarboxylic acid has 20 or more carbon atoms, and more preferably has 21 or more carbon atoms . The upper limit value of the number of carbon atoms is preferably 50 or smaller, more preferably 40 or smaller, even more preferably 32 or smaller, and yet more preferably 30 or smaller.

Each of the tetracarboxylic acid and the tetrahydric alcohol may contain at least one of aliphatic structure, alicyclic structure and aromatic structure, and preferably contains aliphatic structure and/or alicyclic structure.

Each of the tetracarboxylic acid and the tetrahydric alcohol is preferably composed of a straight-chain or branched aliphatic structure or alicyclic structure, as well as a carboxy group or hydroxy group. The number of carbon atoms of each of the tetracarboxylic acid and the tetrahydric alcohol is preferably 3 or larger, more preferably 4 or larger, and even more preferably 5 or larger. Meanwhile, the number of carbon atoms of each of the tetracarboxylic acid and the teterahydric alcohol is preferably 10 or smaller, and more preferably 8 or smaller.

In particular, the tetraester compound used in this invention is preferably a tetraester compound obtained from a tetracarboxylic acid having 3 to 10 carbon atoms and a monohydric alcohol having 20 to 40 carbon atoms, or a tetraester compound obtained from a tetrahydric alcohol having 3 to 10 carbon atoms, and a monocarboxylic acid having 20 to 40 carbon atoms, or a mixture thereof; more preferably a tetraester compound obtained from a tetracarboxylic acid having 3 to 10 carbon atoms and a monohydric alcohol having 20 to 30 carbon atoms, or a tetraester compound obtained from a tetrahydric alcohol having 3 to 10 carbon atoms and a monocarboxylic acid having 20 to 30 carbon atoms, or a mixture thereof; and even more preferably a tetraester compound obtained from a tetrahydric alcohol having 3 to 10 carbon atoms and a monocarboxylic acid having 20 to 30 carbon atoms, or a mixture thereof.

Moreover, in the tetraester compound used in this invention composed of a tetrahydric alcohol and a monocarboxylic acid, the number of carbon atoms of the monocarboxylic acid is preferably larger by at least 10 than the number of carbon atoms of the tetrahydric alcohol, which is more preferably larger by 10 to 20. With such structure, the resin composition will be less likely to produce gas during extrusion and molding, and thereby the molded article tends to have improved appearance and physical properties.

The tetracarboxylic acid may have a substituent or may be free from substituent, and is preferably free from substituent. Without substituent, the obtainable molded article tends to have improved transparency. The carboxylic acid is preferably composed only of oxygen atom, carbon atom and hydrogen atom.

The monocarboxylic acid having 20 or more carbon atoms (numeral in the parentheses stands for the number of carbon atoms) is specifically exemplified by behenic acid (22), lignoceric acid (24), cerotic acid (26), montanic acid (28), and melissic acid (30).

The monohydric alcohol having 20 or more carbon atoms (numeral in the parentheses stands for the number of carbon atoms) is specifically exemplified by behenyl alcohol (22) and montanyl alcohol (28).

The tetracarboxylic acid (numeral in the parentheses stands for the number of carbon atoms) is specifically exemplified by 1,2,4,5-cyclohexanetetracarboxylic acid (10), 1,2,3,5-cyclohexanetetracarboxylic acid (10), 1,2,4,5-benzenetetracarboxylic acid (10), and 1,2,3,5-benzenetetracarboxylic acid (10).

The tetrahydric alcohol (numeral in the parentheses stands for the number of carbon atoms) is specifically exemplified by erythritol (4), pentaerythritol (5), 1,2,4,5-cyclohexanetetrol (6), 1,2,3,5-cyclohexanetetrol (6), 1,2,4,5-benzenetetrol (6), and 1,2,3,5-benzenetetrol (6).

The tetraester compound used in this invention preferably contains a partial structure represented by formula (B1) below: Formula (B1)

[Chemical Formula 16]

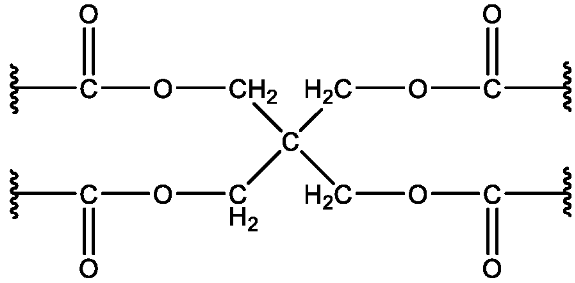

where, wavy lines indicate bond-forming sites.

Among others, the tetraester compound used in this invention is preferably a compound represented by formula

(B10) below: Formula (B10)

[Chemical Formula 17]

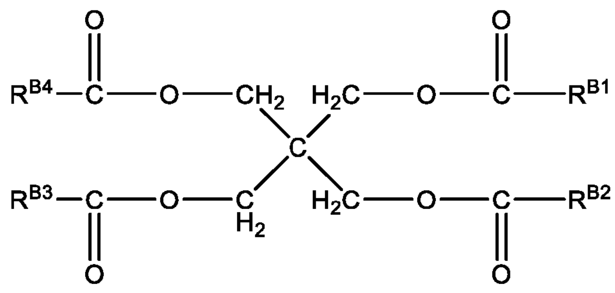

In the formula, each of $RB^1$ to $RB^4$ independently represents an aliphatic hydrocarbon group having one or more carbon atoms, and at least one of $RB^1$ to $RB^4$ represents an aliphatic hydrocarbon group having 20 or more carbon atoms. The aliphatic hydrocarbon group represented by each of $RB^1$ to $RB^4$ is preferably a saturated aliphatic hydrocarbon group, and more preferably a straight-chain saturated aliphatic hydrocarbon group. The number of carbon atoms of the aliphatic hydrocarbon group represented by each of $RB^1$ to $RB^4$ is preferably 2 or larger, more preferably 5 or larger, even more preferably 10 or larger, and particularly 20 or larger. The upper limit value is preferably 45 or smaller, more preferably 40 or smaller, and even more preferably 36 or smaller. The number of carbon atoms of the aliphatic hydrocarbon group represented by each of $RB^1$ to $RB^4$ is preferably 20 or larger independently.

The tetraester compound used in this invention, which often exists in the form of mixture of a plurality of compounds with different number of carbon atoms, is now defined in this invention to be an ester compound contained as a major ingredient (which preferably accounts for 50% by mass or more, and more preferably 70% by mass or more).

The tetraester compound preferably has a hydroxyl value of 100 mgKOH/g or smaller, which is more preferably 70 mgKOH/g or smaller, more preferably 50 mgKOH/g or smaller, and even more preferably 10 mgKOH/g or smaller. The lower limit value of the hydroxyl value of the tetraester compound is typically, but not limitedly, 1 mgKOH/g or larger. With the hydroxyl value of the tetraester compound controlled to 100 mgKOH/g or smaller, the polycarbonate resin will be effectively suppressed from decomposing, the resin composition will be suppressed from generating gas during extrusion and molding, thereby the molded article tends to have improved appearance and physical properties.

According to this embodiment, the molded article obtained from the composition of this invention also excels in nail scratch resistance measured after being wiped with a cotton cloth impregnated with ethanol.

The tetraester compound used in this invention preferably has a molecular weight of 2200 or smaller, more preferably 2000 or smaller, and even more preferably 1800 or smaller. The lower limit value is preferably 1400 or larger. With the molecular weight of the tetraester compound controlled within the aforementioned ranges, the obtainable molded article will be more excellently balanced between high transparency and high nail scratch resistance.

In the tetraester compound used in this invention, the carboxylic acid composing the ester structure may have a substituent or may be free from substituent, and is preferably free from substituent. Without substituent, the obtainable molded article tends to have improved transparency. The carboxylic acid is preferably composed only of oxygen atom, carbon atom and hydrogen atom.

The resin composition of this invention contains, per 100 parts by mass of the (A) polycarbonate resin, 0.4 to 10.0 parts by mass of the (B) ester compound.

The lower limit value of the amount of mixing of the (B) ester compound, per 100 parts by mass of the (A) polycarbonate resin, is preferably 0.5 parts by mass or larger, more preferably 0.6 parts by mass or larger, even more preferably 0.8 parts by mass or larger, yet more preferably 1.0 part by mass or larger, furthermore preferably 1.5 parts by mass or larger, particularly 1.8 parts by mass or larger, and also preferably 2.0 parts by mass or larger, even may exceed 2.0 parts by mass, and may be 2.2 parts by mass or larger. Within these ranges, the nail scratch resistance may further be improved.

The upper limit value of the amount of addition of the (B) ester compound, per 100 parts by mass of the (A) polycarbonate resin, is preferably 9.0 parts by mass or smaller, more preferably 8.0 parts by mass or smaller, even more preferably 7.0 parts by mass or smaller, yet more preferably 6.0 parts by mass or smaller, furthermore preferably 5.0 parts by mass or smaller, and may be 4.0 parts by mass or smaller, 3.5 parts by mass or smaller, or 3.2 parts by mass or smaller. Within these preferred ranges, the hydrolysis resistance may be improved, and pollution of dies may be suppressed more effectively. This invention can achieve excellent nail scratch resistance, even with a small amount of addition of the (B) ester compound.

The resin composition of this invention may contain only one kind of the (B) ester compound, or may contain two or more kinds. When two or more kinds are contained, the total content preferably falls within the aforementioned ranges.

<Other Ingredients>

The resin composition of this invention may optionally contain ingredients other than those described above, without heavily degrading the desired levels of various physical characteristics. Such other ingredients are exemplified by thermoplastic resins other than the aforementioned polycarbonate resin (for example, acrylic resin, etc.), and various additives for resin.

The resin composition of this invention is preferably free from inorganic filler, but may contain the inorganic filler. With the inorganic filler contained therein, the obtainable molded article will have more improved mechanical strength. One embodiment of the resin composition of this invention is exemplified by a resin composition that is free from inorganic filler, or contains an inorganic filler which amounts, per 100 parts by mass of the (A) polycarbonate resin, 8 parts by mass or less (preferably 6 parts by mass or less, more preferably 4 parts by mass, and even more preferably 1 part by mass or less). With the inorganic filler unused or used within the aforementioned amount of mixing, the obtainable molded article will have more improved transparency. Regarding the inorganic filler, descriptions in paragraphs [0075] to [0079] of JP-A-2017-110180 may be referred to.

The additives for resin are exemplified by stabilizer (heat stabilizer, antioxidant, etc.), UV absorber, antistatic agent, flame retardant, flame retardant auxiliary, dye, pigment, anti-clouding agent, lubricant, anti-blocking agent, fluidity improver, plasticizer, dispersion aid and anti-bacterial agent. Only one kind of the additives for resin may be contained, or freely selected two or more kinds of the additives may be combined according to a freely selectable ratio.

<<Acrylic Resin>>

The polycarbonate resin composition of this invention may contain an acrylic resin as such other thermoplastic resin. The acrylic resin preferably has a structural unit represented by formula (X) below: Formula (X)

[Chemical Formula 18]

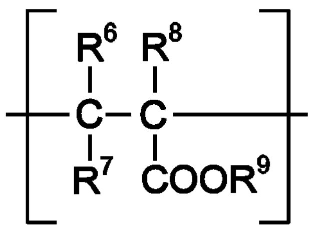

in formula (X), each of $R^6$, $R^7$ and $R^8$ independently represents a hydrogen atom or a hydrocarbon group having 1 to 20 carbon atoms, and $R^9$ represents an optionally substituted aromatic hydrocarbon group having 6 to 20 carbon atoms, or, an aliphatic hydrocarbon group having 1 to 3 carbon atoms substituted by an optionally substituted aromatic hydrocarbon group having 6 to 17 carbon atoms.

The acrylic resin employable in this invention, besides those described above, includes those described in WO2014/038500, WO2013/094898, JP-A-2006-199774 and JP-A-2010-116501.

The amount of mixing of the acrylic resin, when mixed, is preferably within the range from 1 to 30% by mass of the polycarbonate resin composition of this invention, which is more preferably within the range from 1 to 10% by mass.

<<Stabilizer>>

The stabilizer is exemplified by heat stabilizer and antioxidant.

For the heat stabilizer, preferably used is phosphorus-containing stabilizer.

The phosphorus-containing stabilizer employable here may be freely selectable from known ones. Specific examples include oxoacids of phosphorus such as phosphoric acid, phosphonic acid, phosphorous acid, phosphinic acid and polyphosphoric acid; metal salts of acidic pyrophosphate such as acidic sodium pyrophosphate, acidic potassium pyrophosphate and acidic calcium pyrophosphate; phosphates of Group I or Group IIB metals such as potassium phosphate, sodium phosphate, cesium phosphate and zinc phosphate; organic phosphate compound; organic phosphite compound; and organic phosphonite compound. The organic phosphite compound is particularly preferable.

The organic phosphite compound is exemplified by triphenyl phosphite, tris(monononylphenyl) phosphite,

tris(mononony/dinonyl-phenyl) phosphite, tris(2,4-di-tert-butylphenyl) phosphite, monooctyl diphenyl phosphite, dioctylmonophenyl phosphite, monodecyl diphenyl phosphite, didecyl monophenyl phosphite, tridecyl phosphite, trilauryl phosphite, tristearyl phosphite, and 2,2-methylenebis(4,6-di-tert-butylphenyl)octyl phosphite.

Such organic phosphite compounds are specifically exemplified by "ADEKASTAB (registered trademark, the same shall apply hereafter) 1178", "ADEKASTAB 2112" and "ADEKASTAB HP-10" from ADEKA Corporation; "JP-351", "JP-360" and "JP-3CP" from Johoku Chemical Co., Ltd.; and "Irgafos (registered trademark, the same shall apply hereafter) 168" from BASF.

For the antioxidant, preferably used is hindered phenol-based stabilizer.

The hindered phenol-based stabilizer is specifically exemplified by pentaerythritol tetrakis[3-(3,5-di-tert-butyl-4-hydroxyphenyl) propionate], octadecyl-3-(3,5-di-tert-butyl-4-hydroxyphenyl) propionate, thiodiethylene bis[3-(3,5-di-tert-butyl-4-hydroxyphenyl) propionate], N,N'-hexane-1,6-diyl bis[3-(3,5-di-tert-butyl-4-hydroxyphenyl) propionamide], 2,4-dimethyl-6-(1-methylpentadecyl)phenol, diethyl[[3,5-bis(1,1-dimethylethyl)-4-hydroxyphenyl]methyl] phosphate, 3,3',3",5,5',5"-hexa-tert-butyl-a,a',a"-(mesitylene-2,4,6-triyl)tr i-p-cresol, 4,6-bis(octylthiomethyl)-o-cresol, ethylene bis(oxyethylene) bis[3-(5-tert-butyl-4-hydroxy-m-tolyl) propionate], hexamethylene bis[3-(3,5-di-tert-butyl-4-hydroxyphenyl) propionate], 1,3,5-tris(3,5-di-tert-butyl-4-hydroxybenzyl)-1,3,5-triazine-2,4,6 (1H,3H,5H)-trione, 2,6-di-tert-butyl-4-(4,6-bis(octylthio)-1,3,5-triazine-2-ylamino)p henol, and 2-[1-(2-hydroxy-3,5-di-tert-pentylphenyl)ethyl]-4,6-di-tert-pentyl phenyl acrylate.

Among them, preferable are pentaerythritol tetrakis[3-(3,5-di-tert-butyl-4-hydroxyphenyl) propionate], and octadecyl-3-(3,5-di-tert-butyl-4-hydroxyphenyl) propionate. Such hindered phenol-based stabilizers are specifically exemplified by "Irganox (registered trademark, the same shall apply hereafter) 1010" and "Irganox 1076" from BASF; and "ADEKASTAB AO-50" and "ADEKASTAB AO-60" from ADEKA Corporation.

Content of the stabilizer in the resin composition of this invention, per 100 parts by mass of the polycarbonate resin, is usually 0.001 parts by mass or more, preferably 0.005 parts by mass or more, and more preferably 0.01 parts by mass or more, meanwhile usually 1 part by mass or less, preferably 0.5 parts by mass or less, and more preferably 0.3 parts by mass or less. With the content of stabilizer controlled within these ranges, an effect of addition of the stabilizer is effectively demonstrated.

<<UV Absorber>>

Regarding the UV absorber, descriptions in paragraphs [0059] to [0062] of JP-A-2016-216534 may be referred to, the content of which is incorporated by reference into this specification.

<<Antistatic Agent>>

Regarding the antistatic agent, descriptions in paragraphs [0063] to [0067] of JP-A-2016-216534 may be referred to.

<<Flame Retarder>>

Regarding the flame retarder, descriptions in paragraphs [0068] to [0075] of JP-A-2016-216534 may be referred to.

<Properties of Resin Composition>

The resin composition of this invention can achieve low haze. A 2 mm thick molded article formed from the resin composition of this invention has a haze of 5.0% or smaller, which may be 3.0% or smaller, 2.0% or smaller, 1.0% or smaller, 0.5% or smaller, and even may be 0.4% or smaller. The lower limit value of the haze might be ideally 0%, but may be practical enough if it measures 0.01% or larger and even 0.07% or larger. The haze may be measured according to a method described later in EXAMPLE.

A specimen having a thickness of 2 mm (preferably a 150 mm long × 100 mm wide × 2 mm thick specimen) formed from the resin composition of this invention, when measured under a load of 30 N according to ISO 19252, preferably has a dynamic friction coefficient of 0.35 or smaller, which is more preferably 0.34 or smaller, even more preferably 0.30 or smaller, yet more preferably 0.29 or smaller, and furthermore preferably 0.28 or smaller. The lower limit value of the dynamic friction coefficient might be ideally 0, but may be practical enough if it measures 0.01 or larger and even 0.10 or larger. The dynamic friction coefficient may be measured according to a method described later in EXAMPLE.

A specimen having a thickness of 2 mm (preferably a 150 mm long × 100 mm wide × 2 mm thick specimen) formed from the resin composition of this invention has a Δ haze, which is a difference between haze values measured

before and after initial reciprocating abrasion test against bleached cotton cloth (100% cotton, 20×20 count), of 3.00% or smaller, which is more preferably 2.90% or smaller, even more preferably 2.80% or smaller, yet more preferably 2.70% or smaller, and furthermore preferably 2.60% or smaller. The lower limit value of Δ haze before the initial reciprocating abrasion test might be ideally 0%, but may be practical enough if it measures 0.01% or larger, and even 0.07% or larger.

The Δ haze between before and after the initial reciprocating abrasion test may be measured by a method described later in EXAMPLE.

A specimen having a thickness of 2 mm (preferably a 150 mm long × 100 mm wide × 2 mm thick specimen) formed from the resin composition of this invention preferably has a difference, between Δ haze between before and after the reciprocating abrasion test after wiping off the solvent, and Δ haze between before and after the initial reciprocating abrasion test (Δ haze between before and after reciprocating abrasion test after wiping off the solvent - Δ haze between before and after initial reciprocating abrasion test), of 2.5% or smaller, which is more preferably 2.0% or smaller, even more preferably 1.8% or smaller, yet more preferably 1.5% or smaller, and furthermore preferably 1.0% or smaller. The lower limit value of (Δ haze between before and after reciprocating abrasion test after wiping off the solvent - Δ haze between before and after initial reciprocating abrasion test) might be ideally 0%, but may be practical enough if it measures 0.01% or larger, and even 0.07% or larger.

The (Δ haze between before and after reciprocating abrasion test after wiping off the solvent - Δ haze between before and after initial reciprocating abrasion test) may be measured by a method described later in EXAMPLE.

<Method for Manufacturing Resin Composition>

Method for manufacturing the resin composition of this invention is widely selectable from known methods for manufacturing polycarbonate resin composition without special limitation, and is exemplified by a method by which the polycarbonate resin, the ester compound and other optional ingredients are preliminarily mixed using any of various mixers such as tumbler or Henschel mixer, and then melt-kneaded using any of mixers such as Banbury mixer, roll mixer, Brabender mixer, single-screw melt kneader, twin-screw melt kneader extruder or kneader.

Temperature of melt kneading is typically, but not limitedly, in the range from 240 to 320°C.

<Molded Article>

The aforementioned resin composition (in pellet form, for example) may be molded by various molding methods to yield the molded article. That is, the molded article of this invention is formed from the resin composition of this invention.

Shape of the molded article are properly selectable without special limitation, but depending on applications and purposes of the molded article, and is exemplified by film, rod, cylinder, ring, circle, ellipse, polygon, round pillar, polygon, irregular shape, hollow shape, frame, box, panel and button. Among them, preferable are film, frame and panel. The frame and panel typically measure 1 mm to 5 mm in thickness.

Method for forming the molded article is widely selectable from known methods without special limitation, and is exemplified by injection molding, injection compression molding, extrusion molding, profile extrusion, transfer molding, hollow molding, gas-assisted hollow molding, blow molding, extrusion blow molding, IMC (in-mold coating), rotational molding, multilayer molding, two-color molding, insert molding, sandwich molding, foam molding and pressure molding. In particular, the resin composition of this invention is suitable for the molded article obtainable by injection molding, injection compression molding or extrusion molding. The resin composition of this invention is, of course, not limitedly applied to the molded articles manufactured by these methods.

The molded article of this invention is suitably applicable to electric/electronic equipment, OA equipment, personal digital assistant, mechanical part, home electronic appliance, vehicle component, various containers, and lighting equipment part. Among them, the molded article is particularly applied to enclosures for electric/electronic equipment, OA equipment and personal digital assistant; lighting equipment: and vehicle part (particularly vehicle interior part), and most suitably applied to vehicle interior part.

EXAMPLE

This invention will further be detailed referring to Examples. Materials, amounts of consumption, ratios, process details and procedures may appropriately be modified. The scope of this invention is, therefore, not limited to the specific examples described below.

1. Starting Materials

<Exemplary Manufacture 1: Manufacture of Polycarbonate Resin A1>

Into a reaction vessel made of SUS (with an internal volume of 10 liters) equipped with a stirrer and a distillate condenser, placed were 26.14 mol (6.75 kg) of bisphenol C (BPC) and 26.79 mol (5.74 kg) of diphenylcarbonate, the inside of the reaction vessel was replaced with nitrogen gas, and the content was heated to 220°C over 30 minutes in the nitrogen gas atmosphere.

Next, the reaction liquor in a molten state was kept stirred in the reaction vessel, to which cesium carbonate ($Cs_2CO_3$) as a transesterification catalyst was added so as to adjust the content to $1.5\times10^{-6}$ mol per one mol of BPC, and the reaction liquor was incubated under stirring in a nitrogen gas atmosphere at 220°C for 30 minutes. Next, the pressure inside the reaction vessel was reduced down to 100 Torr over 40 minutes while keeping the temperature unchanged, and the reaction liquor was further allowed to react for 100 minutes to distill off phenol.

Next, the inner temperature of the reaction vessel was elevated up to 284°C over 60 minutes, and evacuated down to 3 Torr, so as to distill off phenol that amounts almost entire theoretical volume of distillation. Next, the internal pressure of the reaction vessel was kept below 1 Torr while keeping the temperature unchanged, and the reaction was allowed to continue for 60 minutes to complete polycondensation. The rotating speed for stirring in this process was set to 38 rpm, temperature of the reaction liquor just before the end of reaction was 289°C, and agitation power was 1.00 kW.

The reaction liquor kept in a molten state was then transferred to a twin-screw extruder, butyl p-toluenesulfonate which amounts 4 times as much as the mole quantity of cesium carbonate was fed through a first inlet of the twin-screw extruder and kneaded with the reaction liquor, the reaction liquor was then extruded through a die of the twin-screw extruder into strands, and cut with a cutter to obtain pellets of polycarbonate resin A1.

<Exemplary Manufacture 2: Synthesis of Dibehenyl Adipate>

Diethyl adipate (from Tokyo Chemical Industry Co., Ltd., 40.0 g), behenyl alcohol (from Tokyo Chemical Industry Co., Ltd., 129 g), and a 5% by mass toluene solution (2.64 mL) of tetrabutyl orthotitanate (from Tokyo Chemical Industry Co., Ltd.) were mixed, and allowed to react in a nitrogen atmosphere at 220°C for 3 hours, the pressure was reduced down to 6 kPa, and the mixture was further allowed to react at 220°C for 2 hours, while distilling off the produced ethanol. After completion of the reaction, the mixture was diluted with toluene (300 mL), washed with a 1% by mass aqueous solution (150 g) of disodium hydrogen citrate sesquihydrate (from FUJIFILM Wako Pure Chemical Corporation), and further washed twice with water (150 g). The obtained oil layer was filtered through Celite to remove residual insoluble matter, and the solvent was vaporized off under reduced pressure. The residue was recrystallized from a solution of chloroform (300 mL) and toluene (150 mL), and the residual solvent was vaporized off under reduced pressure, to obtain white powder of dibehenyl adipate (130 g) .

<Exemplary Manufacture 3: Synthesis of Dibehenyl p-Cyclohexanedicarboxylate>

Dimethyl p-cyclohexanedicarboxylate (from Tokyo Chemical Industry Co., Ltd., 40.0 g), behenyl alcohol (from Tokyo Chemical Industry Co., Ltd., 131 g) and a 5% by mass toluene solution (2.60 mL) of tetrabutyl orthotitanate (from Tokyo Chemical Industry Co., Ltd.) were mixed, and allowed to react in a nitrogen atmosphere at 220°C for 3 hours, the pressure was reduced down to 6 kPa, and the mixture was further allowed to react at 220°C for 2 hours, while distilling off the produced methanol. After completion of the reaction, the mixture was diluted with toluene (280 mL), washed with a 1% by mass aqueous solution (140 g) of disodium hydrogen citrate sesquihydrate (from FUJIFILM Wako Pure Chemical Corporation), and further washed twice with water (140 g). The obtained oil layer was filtered through Celite to remove residual insoluble matter, and the solvent was vaporized off under reduced pressure. The residue was recrystallized from a solution of acetone (480 mL) and toluene (160 mL), and the residual solvent was vaporized off under reduced pressure, to obtain white powder of dibehenyl p-cyclohexanedicarboxylate (136 g).

<Exemplary Manufacture 4: Synthesis of Tribehenyl Trimellitate>

Trimethyl trimellitate (from Tokyo Chemical Industry Co., Ltd., 32.0 g), behenyl alcohol (from Tokyo Chemical Industry Co., Ltd., 124 g) and a 5% by mass toluene solution (2.40 mL) of tetrabutyl orthotitanate (from Tokyo Chemical Industry Co., Ltd.) were mixed in a nitrogen atmosphere at 220°C for 3 hours, the pressure was reduced down to 6 kPa, and the mixture was further allowed to react at 220°C for 2 hours, while distilling off the produced methanol. After completion of the reaction, the mixture was diluted with toluene (280 mL), washed with a 1% by mass aqueous solution (140 g) of disodium hydrogen citrate sesquihydrate (from FUJIFILM Wako Pure Chemical Corporation), and further washed twice with water (140 g). The obtained oil layer was filtered through Celite to remove residual insoluble matter,

and the solvent was vaporized off under reduced pressure. The residue was recrystallized from a solution of chloroform (140 mL) and toluene (140 mL), and the residual solvent was vaporized off under reduced pressure, to obtain white powder of tribehenyl trimellitate (103 g) .

Materials listed in Table 1 were used for manufacturing the resin compositions of this invention.

[Table 1]

| Materials | Code | Details |
|---|---|---|
| (A) Polycarbonate resin (PC) | A1 | Aromatic polycarbonate resin manufactured in exemplary manufacture 1 Mv:26,000, pencil hardness:2H |
| | A2 | Bisphenol A, aromatic polycarbonate resin manufactured by interfacial polymerization From Mitsubishi Engineering-Plastics Corporation, "S-3000" Mv:21,000, pencil hardness:2B |
| (B) Ester compound | B1 | Behenyl behenate From NOF CORPORATION, product name:UNISTER M-2222SL, carbon atoms:44, number of ester group: 1, hydroxyl value is 3.1mgKOH/g |
| | B2 | Graft copolymer which contains 70% by mass of polyethylene segment, 26% by mass of styrenic polymer segment and 4% by mass of polydimethylsiloxane segment From NOF CORPORATION, product name:Nof Alloy KA147 |
| | B3 | Pentaerythritol tetrastearate From Cognis Japan, product name:LOXIOL VPG861, carbon atoms:73, number of ester group: 4, hydroxyl value is 20mgKOH/g or less |
| | B4 | Stearyl stearate From NOF CORPORATION, product name:UNISTER M-9676, carbon atoms:36, number of ester group:1, hydroxyl value is 6mgKOH/g |
| | B5 | Wax type additive From BYK Japan KK, product name:CERAFLOUR 996 |
| | B6 | Montanic acid ester From Clariant (Japan) K.K., product name:Licolub WE40, carbon atoms of carboxylic acid:28, carbon atoms of alcohol:3 or more, number of ester group: 5 or more, hydroxyl value is about 40mgKOH/g |
| | B7 | Glyceryl monobehenate From RIKEN VITAMIN Co., Ltd., product name:RIKEMAL B-100, carbon atoms of carboxylic acid:22, carbon atoms of alcohol:3, number of ester group: 1, hydroxyl value is 200m g KOH/g or more |

(continued)

| Materials | Code | Details |
|---|---|---|
| (B) Ester compound | B8 | Glyceryl tribehenate<br>From NOF CORPORATION, carbon atoms of carboxylic acid:22, carbon atoms of alcoho: 3, number of ester group:3, hydroxyl value is 1.0mgKOH/g |
| | B9 | Glyceryl trimontanate<br>From Clariant (Japan) K.K., product name:Licolub WE4, carbon atoms of carboxylic acid: 28, carbon atoms of alcohol:3, number of ester group:3, hydroxyl value is about 40mgKOH/g |
| | B10 | Pentaerythritol tetrabehenate<br>From NOF CORPORATION, product name:WEP-5, carbon atoms of carboxylic acid:22, carbon atoms of alcohol:5, number of ester group: 4, hydroxyl value is 1.0mgKOH/g |
| | B11 | Dibehenyl adipate synthesized in exemplary manufacture 2, carbon atoms of carboxylic acid:6, carbon atoms of alcohol:22, number of ester group:2, hydroxyl value is 4.1mgKOH/g |
| | B12 | Dibehenyl *p*-cyclohexanedicarboxylate synthesized in exemplary manufacture 3, carbon atoms of carboxylic acid:8, carbon atoms of alcohol:22, number of ester group:2, hydroxyl value is 3.8mgKOH/g |
| | B13 | Fatty acid diester obtained from adipate and monohydric alcohol having 16 ~22 carbon atoms<br>From BYK Japan KK, product name:TS3200, carbon atoms of carboxylic acid:6, carbon atoms of alcohol: 16~22, number of ester group:2 |
| | B14 | Tribehenyl trimellitate manufactured in exemplary manufacture 4 carbon atoms of carboxylic acid:9, carbon atoms of alcohol:22, number of ester group:3, hydroxyl value is 4.0mgKOH/g |
| (C) Stabilizer | C1 | Phosphorus-containing stabilizer<br>Tris (2,4-di-tert-butylphenyl) phosphite<br>From ADEKA Corporation, "ADEKASTAB 2112"melting point:183°C |
| | C2 | Hindered phenol-based stabilizer<br>Octadecyl-3-(3,5-di-tert-butyl-4-hydroxyphenyl) propionate<br>From BASF, "Irganox1076" |

<Measurement of Viscosity-Average Molecular Weight (Mv) of Polycarbonate Resin>

Viscosity-average molecular weight (Mv) of the polycarbonate resin was measured by determining intrinsic viscosity (η) (in dL/g) at 20°C in methylene chloride as a solvent using an Ubbelohde viscometer, and calculated using the Schnell's viscosity equation below:

$$\eta = 1.23 \times 10^{-4} Mv^{0.83}$$

<Measurement of Pencil Hardness of Polycarbonate Resin>

The polycarbonate resin pellets were dried at 100°C for 5 hours, and then formed into a plate specimen (150 mm × 100 mm × 2 mm thick) using an injection molding machine ("α-2000i-150B", from Fanuc Corporation), at a cylinder preset temperature of 260°C, a die temperature of 70°C, a screw rotating speed of 100 rpm, and an injection speed of 30 mm/sec. The plate specimen was measured according to ISO 15184, using a pencil hardness tester (from Toyo Seiki Seisaku-sho, Ltd.), to determine pencil hardness under 750 g load.

<Measurement of Hydroxyl Value of Ester Compound>

Hydroxyl value means an amount in mg of potassium hydroxide necessary for neutralizing acetic acid bound

to hydroxyl group, when 1 g of sample is acetylated, and provides an index indicating the number of hydroxy groups remained unreacted, when an alcohol as a starting material of the ester compound is esterified with a carboxylic acid compound.

The hydroxyl value was measured according to a method specified by JIS K0070.

2. Examples 1 to 18, Comparative Examples 1 to 12

<Manufacture of Resin Composition Pellets>

The individual ingredients listed in Table 1 were mixed according to ratios listed in Tables 2 and 3 below (all given in parts by mass), kneaded uniformly using a tumbler mixer, and then fed into a twin-screw extruder (TEX30$\alpha$, from Japan Steel Works, Ltd.) through a barrel on the upstream side of the extruder at a rate of discharge of 30 kg/hr, and melt kneaded at a cylinder preset temperature of 260°C and a screw rotating speed 180 rpm, to thereby obtain resin composition pellets. Extrusion was, however, not possible in Comparative Examples 6 and 8.

<Mole Ratio of Polycarbonate Resin>

Mole ratio (mol%) given in Tables 2 and 3 below is an index of the content of the structural unit represented by formula (1) in the polycarbonate resin contained in the resin composition, and was calculated from the viscosity-average molecular weight, on the basis of the ratio of mixing of the employed resins and the molecular weight of the structural unit represented by formula (1).

<Extrudability>

Extrudability during the manufacture of the resin composition pellets was visually observed, and evaluated as follows:

a: extrudable;
b: unstable extrusion; and
c: extrusion not possible (polycarbonate resin decomposed).

<Amount of Gas Generation during Extrusion>

Amount of gas generation during manufacture of the resin composition pellets was visually determined on the basis of comparison with a reference amount given by the amount of gas generation in Comparative Example 1, and evaluated as below, where (a) stands for a level comparable to or below the reference amount:

a: normal amount of gas generation;
b: slightly larger amount; and
c: large amount.

<Overall Judgment of Extrudability>

Evaluation was given as below, on the basis of the aforementioned extrudability and amount of gas generation:

A: evaluated as (a) both for extrudability and amount of gas generation;
B: not A above and not C below; and
C: evaluated as (c) for at least either extrudability or amount of gas generation.

<Manufacture of Specimen for Evaluating Molded Article>

The resin composition pellets obtained above were dried at 100°C for 5 hours, and then formed into a 150 mm $\times$ 100 mm $\times$ 2 mm thick plate specimen, using an injection molding machine ("$\alpha$-2000i-150B", from Fanuc Corporation), at a cylinder preset temperature of 260°C, a die temperature of 70°C, a screw rotating speed of 100 rpm, and an injection speed of 30 mm/sec.

<Measurement of Haze>

The thus obtained plate specimen was measured using a haze meter to determine haze (in %).
The haze meter employed here was Model NDH-2000, from Nippon Denshoku Industries, Ltd.

<Measurement of Pencil Hardness of Resin Composition>

The plate specimen obtained above was measured according to ISO 15184, using a pencil hardness tester under 1 kg load, to determine pencil hardness.
The pencil hardness tester employed here was a product from Toyo Seiki Seisaku-sho, Ltd.

<Dynamic Friction Coefficient (30 N) >

The plate specimen obtained above was measured according to ISO 19252 using a scratch tester, in which a 1 mmφ round tip was scanned at a test speed of 100 mm/sec, a travel range of 100 mm while varying a vertical load from 1 N to 50 N, horizontal load and vertical load were measured at a point of 30 N load, and dynamic friction coefficient (horizontal load/vertical load) was determined and evaluated as below. The smaller the dynamic friction coefficient, the better.
The scratch tester employed here was a product from Kato Tec Co., Ltd.

a: ≤ 0.30
b: 0.30 <, ≤ 0.35
c: 0.35 <

<Nail Scratch Resistance>

The plate specimen obtained above was rubbed 10 laps under a nail, and then judged by sensory evaluation as below:

a: not scratched, allowing smooth rub;
b: scratched a little, allowing smooth rub;
c: scratched, but fewer than d; and
d: scratched.

<Δ haze between before and after Initial Reciprocating Abrasion Test>

The plate specimen obtained above was measured regarding haze in the same way as described above (letting the haze measured here be "a").
On the other hand, a plate specimen same as that obtained above was tested using a plane abrasion tester, under a bleached cotton cloth (100% cotton, 20×20 count bleached cotton cloth cut into a size of 15 cm × 33 cm) folded into 18 ply, which was attached to a jig of the plane abrasion tester, and reciprocated 500 laps at 40 cycles/min under 1 kg load. Haze of the plate specimen after the reciprocating abrasion test was measured in the same way as described above (letting the haze measured here be "b") . Letting "haze b - haze a" be Δ haze between before and after the initial reciprocating abrasion test, such Δ haze was evaluated according to the criteria below.
The plane abrasion tester employed here was a product from Daiei Kagaku Seiki Mfg. Co., Ltd.
The bleached cotton cloth employed here was a product from Nankai Chemical Co., Ltd.

a: ≤ 2.00%
b: 2.00% <, ≤ 3.00%
c: 3.00% <

<Δ haze between before and after Reciprocating Abrasion Test after Wiping off Solvent - Δ haze between before and after Initial Reciprocating Abrasion Test>

The surface of the plate specimen obtained above was wiped with gauze impregnated with ethanol, and haze was measured in the same way as described above (letting the haze measured here be "c").
Next, the plate specimen was tested in the same way as described above, using a plane abrasion tester, under a bleached cotton cloth (100% cotton, 20×20 count bleached cotton cloth cut into a size of 15 cm × 33 cm) folded into

18 ply, which was attached to a jig of the plane abrasion tester, and reciprocated 500 laps at 40 cycles/min under 1 kg load. Haze of the plate specimen after the reciprocating abrasion test was measured in the same way as described above (letting the haze measured here be "d"). "Haze d - haze c - Δ haze between before and after initial reciprocating abrasion test" was defined to be "Δ haze between before and after reciprocating abrasion test after wiping off solvent - Δ haze between before and after initial reciprocating abrasion test".

The plane abrasion tester employed here was a product from Daiei Kagaku Seiki Mfg. Co., Ltd.

The bleached cotton cloth employed here was a product from Nankai Chemical Co., Ltd.

<Haze, Overall Judgment of Extrudability, Nail Scratch Resistance, Dynamic Friction Coefficient, and Overall Judgment of Rate of Degradation (Comparison) of Haze between before and after Initial Reciprocating Abrasion Test>

Evaluation was made as below, on the basis of measured results of haze, overall judgment of extrudability, nail scratch resistance, dynamic friction coefficient, and overall judgment of rate of degradation (comparison) of haze between before and after the reciprocating abrasion test:

A: haze ≤ 5.0%, with all items evaluated as "a" or "A";
B: not A above, and not C below;
C: haze ≥ 5.0%, or, with at least one item evaluated as "c", "d", "C" or "D".

Results are summarized in Tables 2 and 3 below.

[Table 2]

| Materials | Code | Comparative example1 | Comparative example2 | Comparative example3 | Example1 |
|---|---|---|---|---|---|
| (A) PC | A1 | 75 | 77 | 77 | 76 |
| | A2 | 25 | 23 | 23 | 24 |
| | Ratio of formula (1) (mol%) | 73 | 75 | 75 | 74 |
| (B) Ester compound | B1 | | | | 1.0 |
| | B2 | | 2.0 | | |
| | B3 | 0.3 | | | |
| | B4 | 0.1 | | | |
| | B5 | | | 2.0 | |
| | B6 | | | | |
| | B7 | | | | |
| | B8 | | | | |
| | B9 | | | | |
| | B10 | | | | |
| | B11 | | | | |
| | B12 | | | | |
| | B13 | | | | |
| | B14 | | | | |
| (C) Stabilizer | C1 | 0.03 | 0.03 | 0.03 | 0.03 |
| | C2 | 0.1 | 0.1 | 0.1 | 0.1 |
| | | | | | |

(continued)

| Materials | Code | Comparative example1 | Comparative example2 | Comparative example3 | Example1 |
|---|---|---|---|---|---|
| Judgment | Extrudability | a | a | a | a |
| | Amount of gas generation during extrusion | basis | a | b | a |
| | Overall judgment of extrudability | A | A | B | A |
| | Pencil hardness | 2H | 2H | 2H | 2H |
| | Haze | 0.2 | 42.0 | 98.0 | 0.3 |
| | Dynamic friction coefficient (measurements) | 0.36 | 0.28 | 0.23 | 0.26 |
| | Dynamic friction coefficient (judgment) | c | a | a | a |
| | Nail scratch resistance | d | a | a | a |
| | ΔHaze between before and after initial reciprocating abrasion test (measurements) | 5.1 | - | - | 2.2 |
| | ΔHaze between before and after initial reciprocating abrasion test (judgment) | c | - | - | b |
| | ΔHaze between before and after reciprocating abrasion test after wiping off solvent -ΔHaze between before and after initial reciprocating abrasion test | 0.3 | - | - | 0.5 |
| Overall judgment | | C | C | C | B |
| Materials | Code | Example2 | Examples | Comparative example4 | Comparative examples |
| (A) PC | A1 | 77 | 79 | | 76 |
| | A2 | 23 | 21 | 100 | 24 |
| | Ratio of formula (1) (mol%) | 75 | 77 | 0 | 74 |

(continued)

| Materials | Code | Example2 | Examples | Comparative example4 | Comparative examples |
|---|---|---|---|---|---|
| (B) Ester compound | B1 | 2.0 | 5.3 | 3.1 | 0.3 |
| | B2 | | | | |
| | B3 | | | | |
| | B4 | | | | |
| | B5 | | | | |
| | B6 | | | | |
| | B7 | | | | |
| | B8 | | | | |
| | B9 | | | | |
| | B10 | | | | |
| | B11 | | | | |
| | B12 | | | | |
| | B13 | | | | |
| | B14 | | | | |
| (C) Stabilizer | C1 | 0.03 | 0.03 | 0.03 | 0.03 |
| | C2 | 0.1 | 0.1 | 0.1 | 0.1 |
| | | | | | |

(continued)

| Materials | Code | Example2 | Examples | Comparative example4 | Comparative examples |
|---|---|---|---|---|---|
| Judgment | Extrudability | a | a | a | a |
| | Amount of gas generation during extrusion | a | a | a | a |
| | Overall judgment of extrudability | A | A | A | A |
| | Pencil hardness | 2H | 2H | 2B | 2H |
| | Haze | 0.2 | 0.2 | 7.8 | 0.2 |
| | Dynamic friction coefficient (measurements) | 0.25 | 0.24 | 0.41 | 0.32 |
| | Dynamic friction coefficient (judgment) | a | a | c | b |
| | Nail scratch resistance | a | a | c | c |
| | ΔHaze between before and after initial reciprocating abrasion test (measurements) | 0.7 | 0.6 | 10.1 | 3.1 |
| | ΔHaze between before and after initial reciprocating abrasion test (judgment) | a | a | c | c |
| | ΔHaze between before and after reciprocating abrasion test after wiping off solvent -ΔHaze between before and after initial reciprocating abrasion test | 0.6 | 0.6 | 0.1 | 0.3 |
| Overall judgment | | A | A | C | C |
| Materials | Code | Comparative example6 | Comparative example7 | Example4 | Examples |
| (A) PC | A1 | 85 | 76 | 76 | 77 |
| | A2 | 15 | 24 | 24 | 23 |
| | Ratio of formula (1) (mol%) | 84 | 74 | 74 | 75 |

(continued)

| Materials | Code | Comparative example6 | Comparative example7 | Example4 | Examples |
|---|---|---|---|---|---|
| (B) Ester compound | B1 | 13.6 | | | |
| | B2 | | | | |
| | B3 | | | | |
| | B4 | | | | |
| | B5 | | | | |
| | B6 | | 1.0 | | |
| | B7 | | | | |
| | B8 | | | 1.0 | 2.0 |
| | B9 | | | | |
| | B10 | | | | |
| | B11 | | | | |
| | B12 | | | | |
| | B13 | | | | |
| | B14 | | | | |
| (C) Stabilizer | C1 | 0.03 | 0.03 | 0.03 | 0.03 |
| | C2 | 0.1 | 0.1 | 0.1 | 0.1 |
| | | | | | |

(continued)

| Materials | Code | Comparative example6 | Comparative example7 | Example4 | Examples |
|---|---|---|---|---|---|
| Judgment | Extrudability | c | a | a | a |
| | Amount of gas generation during extrusion | c | a | a | a |
| | Overall judgment of extrudability | C | A | A | A |
| | Pencil hardness | Extrusion not possible | 2H | 2H | 2H |
| | Haze | | 9.9 | 0.2 | 0.3 |
| | Dynamic friction coefficient (measurements) | | 0.28 | 0.29 | 0.28 |
| | Dynamic friction coefficient (judgment) | | a | a | a |
| | Nail scratch resistance | | b | a | a |
| | ΔHaze between before and after initial reciprocating abrasion test (measurements) | | - | 1.1 | 0.9 |
| | ΔHaze between before and after initial reciprocating abrasion test (judgment) | | - | a | a |
| | ΔHaze between before and after reciprocating abrasion test after wiping off solvent -ΔHaze between before and after initial reciprocating abrasion test | | - | 0.5 | 0.6 |
| Overall judgment | | C | C | A | A |
| Materials | Code | Example6 | Example7 | Example8 | |
| (A) PC | A1 | 76 | 76 | 76 | |
| | A2 | 24 | 24 | 24 | |
| | Ratio of formula (1) (mol%) | 74 | 74 | 74 | |

(continued)

| Materials | Code | Example6 | Example7 | Example8 |
|---|---|---|---|---|
| (B) Ester compound | B1 | | | |
| | B2 | | | |
| | B3 | | | |
| | B4 | | | |
| | B5 | | | |
| | B6 | | | |
| | B7 | | | |
| | B8 | | | |
| | B9 | 1.0 | | |
| | B10 | | 0.5 | 0.8 |
| | B11 | | | |
| | B12 | | | |
| | B13 | | | |
| | B14 | | | |
| (C) Stabilizer | C1 | 0.03 | 0.03 | 0.03 |
| | C2 | 0.1 | 0.1 | 0.1 |
| | | | | |
| Judgment | Extrudability | a | a | a |
| | Amount of gas generation during extrusion | a | a | a |
| | Overall judgment of extrudability | A | A | A |
| | Pencil hardness | 2H | 2H | 2H |
| | Haze | 1.0 | 0.2 | 0.2 |
| | Dynamic friction coefficient (measurements) | 0.30 | 0.31 | 0.30 |
| | Dynamic friction coefficient (judgment) | a | b | a |
| | Nail scratch resistance | a | a | a |
| | ΔHaze between before and after initial reciprocating abrasion test (measurements) | 1.2 | 2.1 | 1.2 |
| | ΔHaze between before and after initial reciprocating abrasion test (judgment) | a | b | a |
| | ΔHaze between before and after reciprocating abrasion test after wiping off solvent -ΔHaze between before and after initial reciprocating abrasion test | 0.5 | 0.6 | 0.6 |

(continued)

| Materials | Code | Example6 | Example7 | Example8 |
|---|---|---|---|---|
| Overall judgment | | A | B | A |

[Table 3]

| Materials | Code | Example9 | Example10 | Comparative example8 | Example11 |
|---|---|---|---|---|---|
| (A) PC | A1 | 76 | 77 | 85 | 77 |
| | A2 | 24 | 23 | 15 | 23 |
| | Ratio of formula (1) (mol%) | 74 | 72 | 84 | 75 |
| (B) Ester compound | B1 | | | | |
| | B2 | | | | |
| | B3 | | | | |
| | B4 | | | | |
| | B5 | | | | |
| | B6 | | | | |
| | B7 | | | | |
| | B8 | | | | |
| | B9 | | | | |
| | B10 | 1.0 | 2.0 | 13.6 | |
| | B11 | | | | 2.0 |
| | B12 | | | | |
| | B13 | | | | |
| | B14 | | | | |
| (C) Stabilizer | C1 | 0.03 | 0.03 | 0.03 | 0.03 |
| | C2 | 0.1 | 0.1 | 0.1 | 0.1 |

(continued)

| Materials | Code | Example9 | Example10 | Comparative example8 | Example11 |
|---|---|---|---|---|---|
| Judgment | Extrudability | a | a | c | a |
| | Amount of gas generation during extrusion | a | a | c | a |
| | Overall judgment of extrudability | A | A | C | A |
| | Pencil hardness | 2H | 2H | Extrusion not possible | 2H |
| | Haze | 0.2 | 0.3 | | 0.3 |
| | Dynamic friction coefficient (measurements) | 0.30 | 0.29 | | 0.29 |
| | Dynamic friction coefficient (judgment) | a | a | | a |
| | Nail scratch resistance | a | a | | a |
| | ΔHaze between before and after initial reciprocating abrasion test (measurements) | 1.0 | 0.8 | | 1.0 |
| | ΔHaze between before and after initial reciprocating abrasion test (judgment) | a | a | | a |
| | ΔHaze between before and after reciprocating abrasion test after wiping off solvent -ΔHaze between before and after initial reciprocating abrasion test | 0.6 | 0.7 | | 0.6 |
| Overall judgment | | A | A | C | A |
| Materials | Code | Example12 | Example13 | Example14 | Example15 |
| (A) PC | A1 | 78 | 77 | 78 | 77 |
| | A2 | 22 | 23 | 22 | 23 |
| | Ratio of formula (1) (mol%) | 76 | 75 | 76 | 75 |

(continued)

| Materials | Code | Example12 | Example13 | Example14 | Example15 |
|---|---|---|---|---|---|
| (B) Ester compound | B1 | | | | |
| | B2 | | | | |
| | B3 | | | | |
| | B4 | | | | |
| | B5 | | | | |
| | B6 | | | | |
| | B7 | | | | |
| | B8 | | | | |
| | B9 | | | | |
| | B10 | | | | |
| | B11 | 3.0 | | | |
| | B12 | | 2.0 | 3.0 | |
| | B13 | | | | 2.0 |
| | B14 | | | | |
| (C) Stabilizer | C1 | 0.03 | 0.03 | 0.03 | 0.03 |
| | C2 | 0.1 | 0.1 | 0.1 | 0.1 |
| Judgment | Extrudability | a | a | a | a |
| | Amount of gas generation during extrusion | a | a | a | b |
| | Overall judgment of extrudability | A | A | A | B |
| | Pencil hardness | 2H | 2H | 2H | 2H |
| | Haze | 0.3 | 0.3 | 0.3 | 0.3 |
| | Dynamic friction coefficient (measurements) | 0.26 | 0.30 | 0.29 | 0.33 |
| | Dynamic friction coefficient (judgment) | a | a | a | b |
| | Nail scratch resistance | a | a | a | b |
| | ΔHaze between before and after initial reciprocating abrasion test (measurements) | 0.6 | 1.3 | 0.9 | 1.1 |
| | ΔHaze between before and after initial reciprocating abrasion test (judgment) | a | a | a | a |
| | ΔHaze between before and after reciprocating abrasion test after wiping off solvent -ΔHaze between before and after initial reciprocating abrasion test | 0.7 | 0.6 | 0.7 | 0.6 |
| Overall judgment | | A | A | A | B |

(continued)

| Materials | Code | Example16 | Example17 | Example18 | Comparative example9 |
|---|---|---|---|---|---|
| (A) PC | A1 | 79 | 77 | 78 | |
| | A2 | 21 | 23 | 22 | 100 |
| | Ratio of formula (1) (mol%) | 77 | 75 | 76 | 0 |
| (B) Ester compound | B1 | | | | 2.0 |
| | B2 | | | | |
| | B3 | | | | |
| | B4 | | | | |
| | B5 | | | | |
| | B6 | | | | |
| | B7 | | | | |
| | B8 | | | | |
| | B9 | | | | |
| | B10 | | | | |
| | B11 | | | | |
| | B12 | | | | |
| | B13 | 5.3 | | | |
| | B14 | | 2.0 | 3.0 | |
| (C) Stabilizer | C1 | 0.03 | 0.03 | 0.03 | 0.03 |
| | C2 | 0.1 | 0.1 | 0.1 | 0.1 |

(continued)

| Materials | Code | Example16 | Example17 | Example18 | Comparative example9 |
|---|---|---|---|---|---|
| Judgment | Extrudability | a | a | a | a |
| | Amount of gas generation during extrusion | b | a | a | a |
| | Overall judgment of extrudability | B | A | A | A |
| | Pencil hardness | 2H | 2H | 2H | 2B |
| | Haze | 0.3 | 0.3 | 0.3 | 6.8 |
| | Dynamic friction coefficient (measurements) | 0.28 | 0.28 | 0.26 | 0.42 |
| | Dynamic friction coefficient (judgment) | a | a | a | c |
| | Nail scratch resistance | a | a | a | d |
| | ΔHaze between before and after initial reciprocating abrasion test (measurements) | 0.7 | 1.6 | 1.5 | 10.8 |
| | ΔHaze between before and after initial reciprocating abrasion test (judgment) | a | a | a | c |
| | ΔHaze between before and after reciprocating abrasion test after wiping off solvent -ΔHaze between before and after initial reciprocating abrasion test | 0.7 | 1.6 | 1.5 | 0.1 |
| Overall judgment | | B | A | A | C |
| Materials | Code | Comparative example10 | Comparative example11 | Comparative example12 | |
| (A) PC | A1 | | | 77 | |
| | A2 | 100 | 100 | 23 | |
| | Ratio of formula (1) (mol%) | 0 | 0 | 75 | |

(continued)

| Materials | Code | Comparative example10 | Comparative example11 | Comparative example12 |
|---|---|---|---|---|
| (B) Ester compound | B1 | | | |
| | B2 | | | |
| | B3 | | 0.3 | |
| | B4 | 2.0 | 0.1 | |
| | B5 | | | |
| | B6 | | | 2.0 |
| | B7 | | | |
| | B8 | | | |
| | B9 | | | |
| | B10 | | | |
| | B11 | | | |
| | B12 | | | |
| | B13 | | | |
| | B14 | | | |
| (C) Stabilizer | C1 | 0.03 | 0.03 | 0.03 |
| | C2 | 0.1 | 0.1 | 0.1 |
| | | | | |

(continued)

| Materials | Code | Comparative example10 | Comparative example11 | Comparative example12 |
|---|---|---|---|---|
| Judgment | Extrudability | a | a | a |
| | Amount of gas generation during extrusion | c | a | a |
| | Overall judgment of extrudability | C | A | A |
| | Pencil hardness | 2B | 2B | 2H |
| | Haze | 0.3 | 0.2 | 62.7 |
| | Dynamic friction coefficient (measurements) | 0.41 | 0.49 | 0.25 |
| | Dynamic friction coefficient (judgment) | c | c | a |
| | Nail scratch resistance | d | d | b |
| | ΔHaze between before and after initial reciprocating abrasion test (measurements) | 12.4 | 24.6 | - |
| | ΔHaze between before and after initial reciprocating abrasion test (judgment) | c | c | - |
| | ΔHaze between before and after reciprocating abrasion test after wiping off solvent -ΔHaze between before and after initial reciprocating abrasion test | 0.1 | 0.1 | - |
| Overall judgment | | C | C | C |

As is clear from the results above, the resin compositions of this invention were found to excel in the scratch resistance, particularly in retention rate of transparency when compared between before and after the friction test, and in extrudability (Examples 1 to 18).

In contrast, the resin compositions with high dynamic friction coefficient and less amount of addition of the ester compound, despite low haze, were found to show drastically degraded haze when compared between before and after the abrasion test, and to show poor scratch resistance (Comparative Examples 1, 4, 5, 9 to 11).

Comparative Examples 2, 3, 7 and 12 were not measured regarding rate of decrease of Δ haze between before and after the initial reciprocating abrasion test, since their haze vales were found to be large from the beginning.

A larger amount of addition of ester compound (Comparative Examples 6 and 8) disabled extrusion. For Comparative Examples 6 and 8, the pencil hardness, haze and some other items were not measured, due to failure of extrusion.

Absence of the structural unit represented by formula (1) were found to result in low pencil hardness (Comparative Examples 4, 9 to 11).

## Claims

1. A resin composition containing 0.4 to 10.0 parts by mass of (B) ester compound, per 100 parts by mass of (A) polycarbonate resin,

   the (A) polycarbonate resin containing 50 to 100 mol%, relative to the total structural units, of a structural unit represented by formula (1) below,

the (B) ester compound being composed of an alcohol and a carboxylic acid, and
a specimen having a thickness of 2 mm and formed from the resin composition having a haze of 5.0% or smaller, measured as indicated in the description,
and a dynamic friction coefficient of 0.35 or smaller when measured under a load of 30 N according to ISO 19252;

Formula (1)

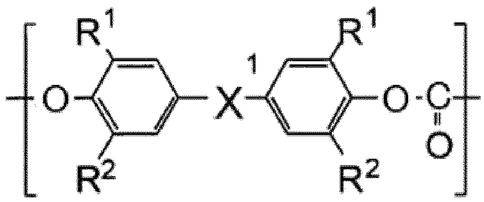

wherein each $R^1$ represents a methyl group, each $R^2$ represents a hydrogen atom or a methyl group, $X^1$ represents either one of structures below:

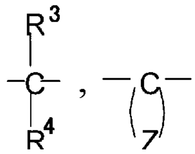

wherein each of $R^3$ and $R^4$ independently represents a hydrogen atom or a methyl group, and Z represents a group that combines with C to form an optionally substituted alicyclic hydrocarbon group having 6 to 12 carbon atoms.

2. The resin composition of Claim 1, containing 0.5 to 10.0 parts by mass of the (B) ester compound, per 100 parts by mass of the (A) polycarbonate resin.

3. The resin composition of Claim 1 or 2, wherein the (B) ester compound is a fatty acid ester.

4. The resin composition of any one of Claims 1 to 3, wherein the (B) ester compound is formed of a saturated straight-chain carboxylic acid and a saturated straight-chain alcohol.

5. The resin composition of any one of Claims 1 to 4, wherein the (B) ester compound is at least one kind of monoester compounds.

6. The resin composition of any one of Claims 1 to 4, wherein the (A) polycarbonate resin further contains a structural unit represented by formula (3) below;

Formula (3)

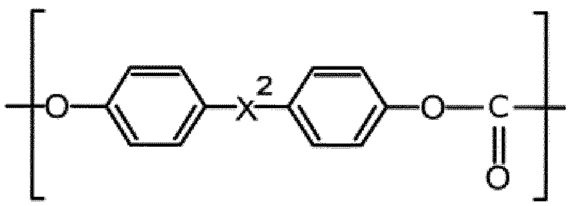

wherein $X^2$ represents either one of structures below:

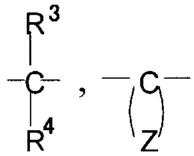

wherein each of $R^3$ and $R^4$ independently represents a hydrogen atom or a methyl group, and Z represents a group that combines with C to form an optionally substituted alicyclic hydrocarbon group having 6 to 12 carbon atoms.

**7.** The resin composition of Claim 6, wherein the (A) polycarbonate resin contains, relative to the total structural units, 50 to 95 mol% of the structural unit represented by formula (1), and 50 to 5 mol% of the structural unit represented by formula (3).

**8.** The resin composition of Claim 6, wherein the (A) polycarbonate resin contains, relative to the total structural units, 60 to 90 mol% of the structural unit represented by formula (1), and 40 to 10 mol% of structural unit represented by formula (3).

**9.** The resin composition of any one of Claims 1 to 8, wherein the resin composition is free from inorganic filler, or contains 8 parts by mass or less of the inorganic filler, per 100 parts by mass of the (A) polycarbonate resin.

**10.** The resin composition of any one of Claims 1 to 9, wherein the specimen having a thickness of 2 mm and formed from the resin composition has a Δ haze, which is a difference between haze values measured before and after initial reciprocating abrasion test against bleached cotton cloth, using for the determination of the haze values measured before and after initial reciprocating abrasion test the haze meter as indicated in the description of 3.00% or smaller.

**11.** A molded article formed from the resin composition described in any one of Claims 1 to 10.

**Patentansprüche**

**1.** Harzzusammensetzung, die 0,4 bis 10,0 Masseteile (B) Esterverbindung, pro 100 Masseteilen (A) Polycarbonatharz enthält,

wobei das (A) Polycarbonatharz 50 bis 100 Mol-%, im Verhältnis zu den gesamten Struktureinheiten, eine Struktureinheit enthält, dargestellt durch die nachfolgende Formel (1),
wobei die (B) Esterverbindung aus einem Alkohol und einer Carbonsäure zusammengesetzt ist, und
wobei eine Probe mit einer Dicke von 2 mm, die aus der Harzzusammensetzung gebildet ist, eine Trübung von 5,0 % oder weniger, gemessen wie in der Beschreibung angegeben, und einen dynamischen Reibungskoeffizienten von 0,35 oder weniger, gemessen unter einer Last von 30 N nach ISO 19252, aufweist;

Formel (1)

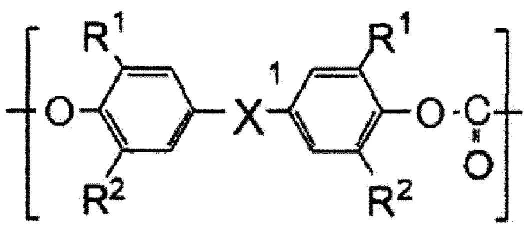

wobei jedes $R^1$ eine Methylgruppe, jedes $R^2$ ein Wasserstoffatom oder eine Methylgruppe, $X^1$ irgendeine der folgenden Strukturen darstellt:

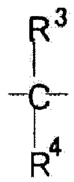 , 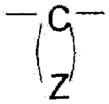

wobei jedes von $R^3$ und $R^4$ unabhängig voneinander ein Wasserstoffatom oder eine Methylgruppe darstellt, und Z eine Gruppe darstellt, die sich mit C zu einer gegebenenfalls substituierten alicyclischen Kohlenwasserstoffgruppe mit 6 bis 12 Kohlenstoffatomen verbindet.

**2.** Harzzusammensetzung nach Anspruch 1, die 0,5 bis 10,0 Masseteile der (B) Esterverbindung, pro 100 Masseteilen des (A) Polycarbonatharzes enthält.

**3.** Harzzusammensetzung nach Anspruch 1 oder 2, wobei die (B) Esterverbindung ein Fettsäureester ist.

**4.** Harzzusammensetzung nach einem der Ansprüche 1 bis 3, wobei die (B) Esterverbindung aus einer gesättigten geradkettigen Carbonsäure und einem gesättigten geradkettigen Alkohol gebildet ist.

**5.** Harzzusammensetzung nach einem der Ansprüche 1 bis 4, wobei die (B) Esterverbindung zumindest eine Art von Monoester-Verbindungen ist.

**6.** Harzzusammensetzung nach einem der Ansprüche 1 bis 4, wobei das (A) Polycarbonatharz weiterhin eine Struktureinheit enthält, die in der folgenden Formel (3) dargestellt ist;

Formel (3)

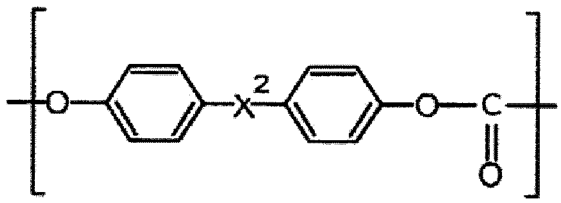

wobei $X^2$ eine der folgenden Strukturen darstellt;

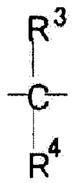 , 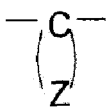

wobei jedes von $R^3$ und $R^4$ unabhängig voneinander ein Wasserstoffatom oder eine Methylgruppe darstellt, und Z eine Gruppe darstellt, die sich mit C zu einer gegebenenfalls substituierten alicyclischen Kohlenwasserstoffgruppe mit 6 bis 12 Kohlenstoffatomen verbindet.

**7.** Harzzusammensetzung nach Anspruch 6, wobei das (A) Polycarbonatharz, im Verhältnis zu den gesamten Struktureinheiten, 50 bis 95 Mol-% der Struktureinheit, dargestellt durch die Formel (1), und 50 bis 5 Mol-% der Struktureinheit, dargestellt durch die Formel (3), enthält.

**8.** Harzzusammensetzung nach Anspruch 6, wobei das (A) Polycarbonatharz, im Verhältnis zu den gesamten Struktureinheiten, 60 bis 90 Mol-% der Struktureinheit, dargestellt durch die Formel (1), und 40 bis 10 Mol-% der Struktureinheit, dargestellt durch die Formel (3), enthält.

**9.** Harzzusammensetzung nach einem der Ansprüche 1 bis 8, wobei die Harzzusammensetzung frei von einem anorganischen Füllstoff ist oder 8 Masseteile oder weniger des anorganischen Füllstoffes pro 100 Masseteilen des

(A) Polycarbonatharzes enthält.

**10.** Harzzusammensetzung nach einem der Ansprüche 1 bis 9, wobei die Probe, welche eine Dicke von 2 mm aufweist und aus der Harzzusammensetzung gebildet ist, eine Δ Trübung, die eine Differenz zwischen Trübungswerten darstellt, gemessen vor und nach dem ersten Hin- und Her-Scheuertest gegen gebleichten Baumwollstoff, von 3,00% oder weniger aufweist, wobei zur Bestimmung der Trübungswerte, gemessen vor und nach dem ersten Hin- und Her-Scheuertest, das Trübungsmessgerät verwendet wird, wie in der Beschreibung angegeben,

**11.** Formartikel, geformt aus der Harzzusammensetzung beschrieben in einem der Ansprüche 1 bis 10.

## Revendications

**1.** Composition de résine contenant 0,4 à 10,0 parties en masse de (B) composé d'ester, pour 100 parties en masse de (A) résine de polycarbonate,

la (A) résine de polycarbonate contenant 50 à 100 %mol, par rapport aux unités structurelles totales, d'une unité structurelle représentée par la formule (1) ci-dessous,
le (B) composé d'ester étant composé d'un alcool et d'un acide carboxylique, et
un échantillon ayant une épaisseur de 2 mm et étant formé à partir de la composition de résine ayant une turbidité de 5,0 % ou inférieure, mesurée comme indiqué dans la description, et un coefficient de friction dynamique de 0,35 ou inférieur lorsqu'il est mesuré sous une charge de 30 N selon ISO 19252 ;

Formule (1)

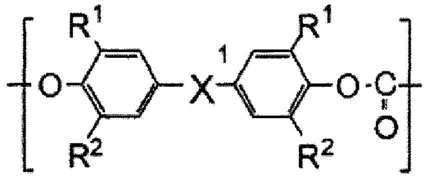

sachant que chaque $R^1$ représente un groupe méthyle, chaque $R^2$ représente un atome d'hydrogène ou un groupe méthyle, $X^1$ représente l'une ou l'autre des structures ci-dessous :

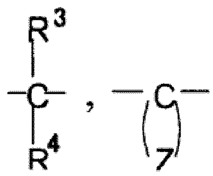

sachant que chacun de $R^3$ et $R^4$ représentent indépendamment un atome d'hydrogène ou un groupe méthyle, et Z représente un groupe qui se combine avec C pour former un groupe d'hydrocarbone alicyclique facultativement substitué comportant 6 à 12 atomes de carbone.

**2.** La composition de résine de la revendication 1, contenant 0,5 à 10,0 parties en masse du (B) composé d'ester, pour 100 parties en masse de la (A) résine de polycarbonate.

**3.** La composition de résine de la revendication 1 ou 2, sachant que le (B) composé d'ester est un ester d'acide gras.

**4.** La composition de résine de l'une quelconque des revendications 1 à 3, sachant que le (B) composé d'ester est formé d'un acide carboxylique à chaîne droite saturé et d'un alcool à chaîne droite saturé.

**5.** La composition de résine de l'une quelconque des revendications 1 à 4, sachant que le (B) composé d'ester est au moins un type de composés de monoester.

**6.** La composition de résine de l'une quelconque des revendications 1 à 4, sachant que la (A) résine de polycarbonate

contient en outre une unité structurelle représentée par la formule (3) ci-dessous ;

Formule (3)

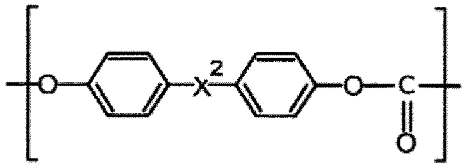

sachant que $X^2$ représente l'une ou l'autre des structures ci-dessous :

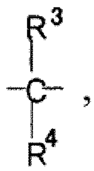 , 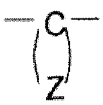

sachant que chacun de $R^3$ et $R^4$ représentent indépendamment un atome d'hydrogène ou un groupe méthyle, et Z représente un groupe qui se combine avec C pour former un groupe d'hydrocarbone alicyclique facultativement substitué comportant 6 à 12 atomes de carbone.

**7.** La composition de résine de la revendication 6, sachant que la (A) résine de polycarbonate contient, par rapport aux unités structurelles totales, 50 à 95 %mol de l'unité structurelle représentée par la formule (1), et 50 à 5 %mol de l'unité structurelle représentée par la formule (3).

**8.** La composition de résine de la revendication 6, sachant que la (A) résine de polycarbonate contient, par rapport aux unités structurelles totales, 60 à 90 %mol de l'unité structurelle représentée par la formule (1), et 40 à 10 %mol de l'unité structurelle représentée par la formule (3).

**9.** La composition de résine de l'une quelconque des revendications 1 à 8, sachant que la composition de résine est exempte de charge inorganique, ou contient 8 parties en masse ou moins de la charge inorganique, pour 100 parties en masse de la (A) résine de polycarbonate.

**10.** La composition de résine de l'une quelconque des revendications 1 à 9, sachant que l'échantillon ayant une épaisseur de 2 mm et étant formé à partir de la composition de résine a une turbidité Δ, qui est une différence entre des valeurs de turbidité mesurées avant et après un test d'abrasion initial par mouvement de va-et-vient contre un chiffon en coton blanchi, moyennant, pour la détermination des valeurs de turbidité mesurées avant et après un test d'abrasion initial par mouvement de va-et-vient, le turbidimètre tel qu'indiqué dans la description, de 3,00 % ou inférieure.

**11.** Article moulé formé à partir de la composition de résine décrite dans l'une quelconque des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014228767 A
- JP 2017110180 A
- WO 2017099226 A
- JP 2011046769 A
- WO 2014038500 A
- WO 2013094898 A
- JP 2006199774 A
- JP 2010116501 A
- JP 2016216534 A